# EUROPEAN PATENT APPLICATION

(11) **EP 4 708 956 A1**
(43) Date of publication of application: **11.03.2026**
(21) Application number: 24822752.2
(22) Date of filing: 13.06.2024
(51) Int. Cl.: H04W 28/02

(54) **DATA VOLUME REPORTING METHOD AND APPARATUS, AND READABLE STORAGE MEDIUM**

(30) Priority: 16.06.2023 CN 202310723869; 09.08.2023 CN 202311002397
(71) Applicant: Huawei Technologies Co., Ltd., Shenzhen, Guangdong 518129 (CN)
(72) Inventor: ZHANG, Yanqing, Shenzhen, Guangdong 518129 (CN); XU, Haibo, Shenzhen, Guangdong 518129 (CN)
(74) Representative: Gill Jennings & Every LLP
(86) International application number: PCT/CN2024/099057
(87) International publication number: WO 2024/255804

(57) **Abstract**

This application may be applied to the field of communication technologies, and provides a data amount reporting method, an apparatus, and a readable storage medium, to avoid repeatedly reporting a data amount of same data. The method includes: A first device triggers a first status report, where the first status report includes a data amount and delay information of first data, and the first data is to-be-transmitted data of the first device. The first device triggers a second status report, where the second status report includes a data amount of second data, and the second data is to-be-transmitted data of the first device. The first device sends a target status report by using a first transmission resource, where the target status report includes the data amount of the first data.

## Description

This application claims priorities to Chinese Patent Application No. 202310723869.8, filed with the China National Intellectual Property Administration on June 16, 2023 and entitled "DATA AMOUNT REPORTING METHOD AND DEVICE", and to Chinese Patent Application No. 202311002397.3, filed with the China National Intellectual Property Administration on August 9, 2023 and entitled "DATA AMOUNT REPORTING METHOD, APPARATUS, AND READABLE STORAGE MEDIUM", both of which are incorporated herein by reference in their entireties.

### TECHNICAL FIELD

This application relates to the field of communication technologies, and in particular, to a data amount reporting method, an apparatus, and a readable storage medium.

### BACKGROUND

In a 5G communication system, a terminal device may report a data amount of to-be-transmitted uplink data to a base station by reporting a buffer status report (buffer status report, BSR), so that the base station can properly allocate an uplink resource to the terminal device based on the reported data amount, to implement uplink scheduling.

Currently, the BSR supports only reporting of a data amount. However, to meet a requirement of some delay-sensitive services on a transmission delay of data, a delay status report (delay status report, DSR) reporting method is currently proposed, to report related delay information of to-be-transmitted data, so as to notify the base station of a transmission delay requirement of the to-be-transmitted data, so that the base station can properly schedule an uplink resource. In addition, a data amount of the to-be-transmitted data may also be reported by using the DSR.

However, based on a current BSR triggering manner and a currently proposed DSR triggering manner, if the uplink resource scheduled by the base station for the terminal device is used to send both the BSR and the DSR, a data amount of same data may exist in data amounts respectively reported by using the BSR and the DSR. In other words, a repeated data amount is reported by using the BSR and the DSR, causing a waste of resources.

### SUMMARY

Embodiments of this application provide a data amount reporting method, an apparatus, and a readable storage medium, to avoid repeatedly reporting a data amount of same data.

To achieve the foregoing objectives, the following technical solutions are used in embodiments of this application.

According to a first aspect, a data amount reporting method is provided. The method may be performed by a first device, or may be performed by a module (for example, a processor, a chip, or a chip system) used in the first device. The following uses an example in which the first device performs the method for description. The method includes: The first device triggers a first status report, where the first status report includes a data amount and delay information of first data, and the first data is to-be-transmitted data of the first device. The first device triggers a second status report, where the second status report includes a data amount of second data, and the second data is to-be-transmitted data of the first device. The first device sends a target status report by using a first transmission resource, where the target status report includes the data amount of the first data.

Based on the data amount reporting method provided in embodiments of this application, when triggering a plurality of status reports, the first device may send the target status report by using the first transmission resource, to report the data amount of the first data once. This avoids repeatedly reporting the data amount of the first data.

With reference to the first aspect, in a possible design, the target status report is a higher-priority one of the first status report and the second status report; and the second data includes the first data.

Based on this solution, a status report with a higher priority may be selected as the target status report based on priorities of the first status report and the second status report, and the other status report does not need to be sent. This avoids repeatedly reporting the data amount of the first data.

With reference to the first aspect, in a possible design, a logical channel multiplexing priority of the first status report is the same as a logical channel multiplexing priority of the second status report, and the second status report is a buffer status report.

Based on this solution, a logical channel multiplexing priority the same as that of the buffer status report may be configured for the first status report.

With reference to the first aspect, in a possible design, the method further includes: The first device obtains first configuration information, where the first configuration information is used to configure a first logical channel to report delay information, and the first logical channel belongs to the first device.

Based on this solution, whether to report delay information may be configured for a logical channel.

With reference to the first aspect, in a possible design, the first data belongs to a second logical channel, the second logical channel is different from the first logical channel, the second status report is triggered by the first data, and the second status report is a buffer status report.

Based on this solution, a buffer status report may be triggered by data on a logical channel that is not configured to report delay information, thereby improving a current buffer status report triggering mechanism.

With reference to the first aspect, in a possible design, the first data belongs to the first logical channel, and
the first status report is triggered by the first data; and/or
the second status report is triggered by data on a second logical channel, the second logical channel is different from the first logical channel, and the second status report is a buffer status report.

Based on this solution, whether to report delay information may be configured for a logical channel, so that the first status report and the second status report may be respectively triggered by data on different logical channels. This avoids reporting a repeated data amount because a status report is repeatedly triggered by data.

With reference to the first aspect, in a possible design, the first data belongs to the first logical channel and the second data does not include the first data.

Based on this solution, a data amount and delay information of data may be reported in the first status report triggered by data on a logical channel that is configured to report delay information, and a data amount of the data on the logical channel that is configured to report delay information is not reported in the second status report. This avoids repeatedly reporting the data amount of the first data in the first status report and the second status report.

With reference to the first aspect, in a possible design, the target status report includes the first status report and the second status report.

Based on this solution, if the second status report does not include the data amount of the first data, both the first status report and the second status report may be sent by using the first transmission resource.

With reference to the first aspect, in a possible design, the method further includes:
The first device cancels the triggered second status report.

Based on this solution, the triggered second status report may be canceled, so that the first status report rather than the second status report is sent by using the first transmission resource. This avoids repeatedly reporting the data amount of the first data.

With reference to the first aspect, in a possible design, the first status report and the second status report are triggered by the first data.

Based on this solution, the first status report and the second status report may be triggered by same data.

According to a second aspect, a data amount reporting method is provided. The method may be performed by a first device, or may be performed by a module (for example, a processor, a chip, or a chip system) used in the first device. The following uses an example in which the first device performs the method for description. The method includes: The first device obtains third data. When a remaining transmission delay budget of the third data is less than a first threshold, if information about the third data has not been reported, the first device triggers a fourth status report, where the fourth status report includes the information about the third data.

Based on the data amount reporting method provided in embodiments of this application, when the remaining transmission delay budget of the third data is less than the first threshold, it may be further determined whether the information about the third data has been reported. If the information about the third data has not been reported, the fourth status report may be triggered to report a data amount of the third data. If the information about the third data has been reported, the fourth status report is not triggered, to avoid repeatedly reporting the information about the third data.

With reference to the second aspect, in a possible design, before the remaining transmission delay budget of the third data is less than the first threshold, the method further includes: The first device sends a third status report. That if the information about the third data has not been reported, the first device triggers the fourth status report includes: If the third status report does not include the information about the third data, the first device triggers the fourth status report.

Based on this solution, it may be determined whether the data amount of the third data is reported in the previously sent third status report, to determine whether to trigger the fourth status report.

With reference to the second aspect, in a possible design, the method further includes: The first device obtains second configuration information, where the second configuration information is used to configure a third logical channel to report delay information, and the third data belongs to the third logical channel.

Based on this solution, a logical channel may be configured to report delay information, and the fourth status report may be triggered by data on the logical channel that is configured to report delay information.

With reference to the second aspect, in a possible design, the method further includes: The first device obtains third configuration information, where the third configuration information is used to configure a packet discard timer, a start moment of the packet discard timer is a moment at which the first device obtains the third data, and when the first packet discard timer expires, the first device discards the third data; and the remaining transmission delay budget of the third data is determined based on the packet discard timer.

Based on this solution, through configuration of the packet discard timer, a remaining transmission delay budget of data may be determined.

According to a third aspect, a data amount reporting method is provided. The method may be performed by a second device, or may be performed by a module (for example, a processor, a chip, or a chip system) used in the second device. The following uses an example in which the second device performs the method for description. The method includes: The second device sends first configuration information, where the first configuration information is used to configure a first logical channel to report delay information. The second device receives a target status report by using a first transmission resource, where the target status report includes a data amount of first data. The first data belongs to a second logical channel, the second logical channel is different from the first logical channel, and the target status report is a buffer status report. Alternatively, the first data belongs to the first logical channel, and the target status report further includes delay information of the first data.

Based on the data amount reporting method provided in embodiments of this application, a logical channel may be configured to report delay information. Both a data amount and delay information of data on the logical channel that is configured to report delay information may be reported by using a status report, and a data amount of data on a logical channel that is not configured to report delay information may be reported by using a buffer status report.

With reference to the third aspect, in a possible design, the first data belongs to the first logical channel, the target status report includes a first status report and a second status report, the first status report includes the data amount and the delay information of the first data, the second status report includes a data amount of second data, and the second data does not include the first data.

Based on this solution, if the first data belongs to the first logical channel, the data amount and the delay information of the first data may be reported by using the first status report, and the data amount of the second data that does not include the first data may be reported by using the second status report. Therefore, both the first status report and the second status report are sent by using the first transmission resource, and the data amount of the first data is not repeatedly reported.

With reference to the third aspect, in a possible design, the delay information of the first data is a remaining transmission delay budget of the first data.

With reference to the third aspect, in a possible design, the method further includes: The second device sends third configuration information, where the third configuration information is used to configure a packet discard timer, a start moment of the packet discard timer is an arrival moment of the first data, and when the first packet discard timer expires, the first data is discarded; and the remaining transmission delay budget of the first data is determined based on the packet discard timer.

Based on this solution, through configuration of the packet discard timer, a remaining transmission delay budget of data may be determined.

According to a fourth aspect, a communication apparatus is provided, to implement the foregoing methods. The communication apparatus includes corresponding modules, units, or means (means) for implementing the methods. The modules, units, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and any one of the possible implementations of the foregoing aspects. The transceiver module may include a receiving module and a sending module that are respectively configured to implement a receiving function and a sending function in any one of the foregoing aspects or the possible implementations of the foregoing aspects.

In some possible designs, the transceiver module may include a transceiver circuit, a transceiver, a transceiver device, or a communication interface.

According to a fifth aspect, a communication apparatus is provided, including a processor and a memory. The memory is configured to store computer instructions. When the processor executes the instructions, the communication apparatus is enabled to perform the method according to any one of the foregoing aspects.

According to a sixth aspect, a communication apparatus is provided, including a processor and a communication interface. The communication interface is configured to communicate with a module other than the communication apparatus. The processor is configured to execute a computer program or instructions, to enable the communication apparatus to perform the method according to any one of the foregoing aspects.

According to a seventh aspect, a communication apparatus is provided, including at least one processor. The processor is configured to execute a computer program or instructions stored in a memory, to enable the communication apparatus to perform the method according to any one of the foregoing aspects. The memory may be coupled to the processor, or may be independent of the processor.

According to an eighth aspect, a computer-readable storage medium is provided. The computer-readable storage medium stores a computer program or instructions. When the computer program or the instructions are run on a communication apparatus, the communication apparatus is enabled to perform the method according to any one of the foregoing aspects.

According to a ninth aspect, a computer program product including instructions is provided. When the computer program product runs on a communication apparatus, the communication apparatus is enabled to perform the method according to any one of the foregoing aspects.

According to a tenth aspect, a communication apparatus is provided (for example, the communication apparatus may be a chip or a chip system). The communication apparatus includes a processor, configured to implement the functions in any one of the foregoing aspects.

In some possible designs, the communication apparatus includes a memory, and the memory is configured to store necessary program instructions and data.

In some possible designs, when the apparatus is a chip system, the apparatus may include a chip, or may include a chip and another discrete component.

The communication apparatus according to any one of the fourth aspect to the tenth aspect may be the first device in the first aspect or the second aspect, or an apparatus included in the first device, for example, a chip or a chip system. Alternatively, the communication apparatus may be the second device in the third aspect, or an apparatus included in the second device, for example, a chip or a chip system.

It can be understood that, when the communication apparatus provided in any one of the fourth aspect to the tenth aspect is a chip, a sending action/function of the communication apparatus may be understood as information output, and a receiving action/function of the communication apparatus may be understood as information input.

For technical effects brought by any one of the designs of the fourth aspect to the tenth aspect, refer to technical effects brought by different designs of the first aspect to the third aspect. Details are not described herein again.

According to an eleventh aspect, a communication system is provided. The communication system includes a first device and a second device. The first device is configured to implement the method according to the first aspect or the second aspect, and the second device is configured to implement the method according to the third aspect.

### BRIEF DESCRIPTION OF DRAWINGS

FIG. 1(a) to FIG. 1(d) are a diagram of structures of a BSR and a DSR;
FIG. 2 is a diagram of repeatedly reporting a same data amount by using a BSR and a DSR;
FIG. 3 is a diagram of repeatedly reporting a same data amount by using different DSRs;
FIG. 4 is a diagram of a structure of a communication system according to an embodiment of this application;
FIG. 5 is a diagram of a structure of a communication apparatus according to an embodiment of this application;
FIG. 6 is a diagram of interaction of a data amount reporting method according to an embodiment of this application;
FIG. 7 is a diagram of a status report triggering method according to an embodiment of this application;
FIG. 8 is a diagram of another status report triggering method according to an embodiment of this application;
FIG. 9 is a diagram of stored duration according to an embodiment of this application;
FIG. 10 is a diagram of duration of a remaining transmission delay budget according to an embodiment of this application; and
FIG. 11 is a diagram of a structure of another communication apparatus according to an embodiment of this application.

### DESCRIPTION OF EMBODIMENTS

For ease of understanding of the technical solutions in embodiments of this application, the following first briefly describes technologies related to this application.

### 1. BSR:

In an uplink transmission scenario, a terminal device may send a BSR to a network device to report an amount of to-be-sent uplink data. The network device may allocate a proper uplink resource to the terminal device based on the BSR, to implement uplink scheduling.

Currently, one terminal device may be configured with a plurality of logical channel groups (logical channel groups, LCGs), for example, eight logical channel groups, and each LCG may further include several logical channels (logical channels, LCHs). When configuring a parameter of an LCH for each terminal device, for example, by using a radio resource control (radio resource control, RRC) message, a base station may configure, for the LCH by using signaling, an LCG group corresponding to the LCH.

A data amount on an LCH included in an LCG is usually reported at a granularity of an LCG by using the BSR. Currently, the BSR is a media access control (media access control, MAC) control element (control element, CE), and therefore may also be referred to as a BSR MAC CE. The BSR has a plurality of formats. Currently, a long BSR (long BSR) may be used to report an amount of to-be-transmitted data on a plurality of LCGs, and a short BSR (short BSR) may be used to report an amount of to-be-transmitted data on one LCG.

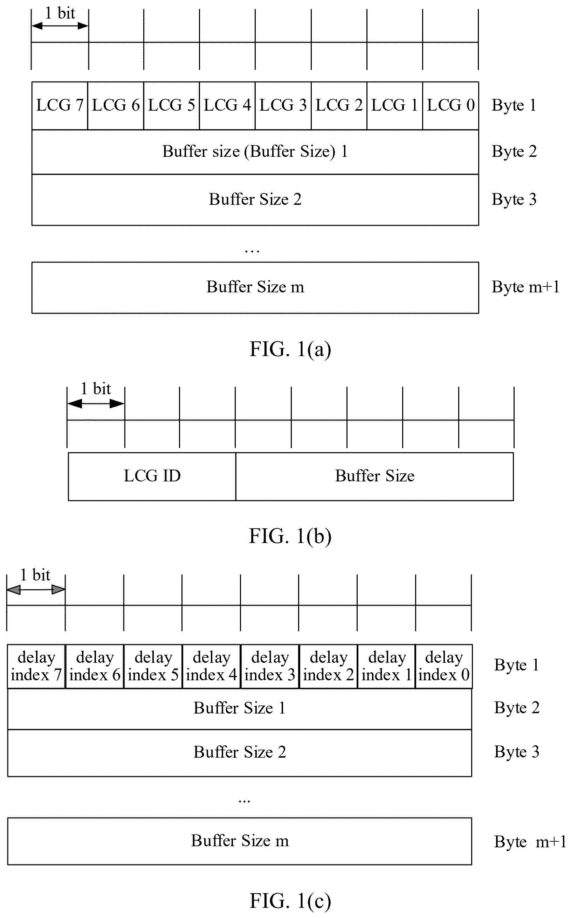

FIG. 1(a) is a diagram of a format of a typical long BSR MAC CE. As shown in FIG. 1(a), a 1^{st} byte (byte) of the BSR, that is, first 8 bits, forms an 8-bit bitmap. Each bit corresponds to one LCG (for example, one of an LCG 0 to an LCG 7 shown in FIG. 1(a)) and indicates whether the BSR includes a data amount on a corresponding LCG or whether the data amount on the LCG is reported in the BSR. If a bit indicates that the BSR includes a data amount on an LCG, the BSR may further include a buffer size (Buffer Size) field (or referred to as a field) indicating the data amount on the LCG, where a size of the buffer size field is usually 1 byte. As shown in FIG. 1(a), when the BSR MAC CE has m LCGs having to-be-transmitted data, that is, when any m bits in the 8-bit bitmap indicate that the BSR includes data amounts on corresponding LCGs, the BSR MAC CE further includes m buffer size fields, and a size of the BSR MAC CE is (m+1) bytes.

**In** addition, a BSR MAC CE in a short BSR format may include 1 byte. As shown in FIG. 1(b), first 3 bits of the byte may indicate an LCG ID, to indicate an LCG whose data amount is reported by using the BSR MAC CE, and last 5 bits may be a buffer size field and indicate an amount of to-be-transmitted data on the LCG.

Currently, there are a plurality of BSR triggering manners, which are separately described below.

Triggering manner 1: A BSR is triggered when any one of the following conditions is met:

New data arrives at an LCH in an LCG, the new uplink data is available to a MAC entity, and a priority of the LCH is higher than a priority of any other LCH having to-be-transmitted data.

Alternatively, when new data arrives at an LCH in an LCG, the new uplink data is available to a MAC entity, and there is no uplink data that can be sent on any LCH in any other LCG.

That data is available to the MAC entity may be understood as that the data can be used, obtained, or allocated by the MAC entity. For example, the MAC entity may multiplex the data into a MAC PDU.

Triggering manner 2: The base station configures a retransmission BSR timer (retxBSR-timer) for the terminal device by using signaling. The timer is used to prevent a delay caused by the terminal device keeping waiting for the uplink resource because the base station does not allocate a corresponding uplink resource after the terminal device sends a BSR. After the timer expires, a BSR is triggered.

The BSR triggered in the triggering manner 1 or triggering manner 2 is generally referred to as a regular BSR (regular BSR).

In addition, if an uplink resource, for example, an uplink MAC protocol data unit (protocol data unit, PDU), can completely accommodate a BSR MAC CE and a MAC CE packet header corresponding to the BSR MAC CE after multiplexing is performed based on a logical channel multiplexing priority, the retransmission BSR timer is also started or restarted.

The logical channel multiplexing priority is used to determine an order of performing multiplexing into the uplink resource. When determining specific signaling or data that may be carried on one uplink resource, the terminal device may multiplex the signaling or the data into the uplink resource based on a sequence of logical channel multiplexing priorities of the signaling or the data.

Triggering manner 3: The base station configures a periodic BSR timer (periodicBSR-Timer) for the terminal device by using RRC signaling. After the timer expires, a BSR is triggered.

The BSR triggered in the triggering manner 3 is usually referred to as a periodic BSR (periodic BSR).

In addition, when the terminal device triggers and reports the regular BSR due to other reasons, the periodic BSR timer is reset.

Triggering manner 4: After the terminal device fills a MAC PDU based on a logical channel multiplexing priority of a MAC CE and data, if a quantity of remaining bits of the MAC PDU is greater than or equal to a size of a BSR MAC CE and a sub-packet header of the BSR MAC CE, a BSR is triggered, and the terminal device may transmit the BSR by using the quantity of remaining bits of the MAC PDU.

The BSR triggered in the triggering manner 4 is usually referred to as a padding BSR (padding BSR).

The regular BSR, the periodic BSR, and the padding BSR may be understood as different BSRs in logic, and names thereof are determined based on different triggering manners thereof. It may be understood that, classification on a BSR based on a triggering manner and classification on the BSR based on a format are classification on the BSR from different dimensions, and a format of a BSR is irrelevant to a triggering manner of the BSR.

A format of a BSR may be determined in the following manner.

When a MAC PDU is assembled/generated, the MAC PDU includes a BSR MAC CE, and the BSR MAC CE is triggered by using a regular BSR or a periodic BSR. If there is more than one LCG having to-be-transmitted data in this case, a long BSR MAC CE is sent, where the long BSR MAC CE includes data amounts on all LCGs having to-be-transmitted data. If there is no more than one LCG having to-be-transmitted data, a short BSR MAC CE is sent.

When the BSR MAC CE included in the MAC PDU is triggered by using a padding BSR, if a data amount of remaining bits is greater than a size of a long BSR MAC CE and a sub-packet header of the BSR MAC CE, the long BSR MAC CE is reported; if a data amount of remaining bits is equal to a size of a short BSR MAC CE and a sub-packet header of the short BSR MAC CE and there is only one LCG having to-be-transmitted data, the short BSR MAC CE is reported; if a data amount of remaining bits is equal to a size of a short BSR MAC CE and a sub-packet header of the short BSR MAC CE and there is more than one LCG having to-be-transmitted data, a short truncated BSR MAC CE is reported; or if a data amount of remaining bits is greater than a size of a short BSR MAC CE and a sub-packet header of the short BSR MAC CE and less than a size of a long BSR MAC CE and a sub-packet header of the BSR MAC CE and there is more than one LCG having to-be-transmitted data, a long truncated BSR MAC CE is reported.

A format of the short truncated BSR MAC CE is the same as a format of the short BSR MAC CE, as shown in FIG. 1(b), but content of a sub-packet header of the short truncated BSR MAC CE, for example, a logical channel identity (logical channel identity, LCID), is different from content of the sub-packet header of the short BSR MAC CE (FIG. 1(a) to FIG. 1(d) do not show the sub-packet header of the short BSR MAC CE and the sub-packet header of the long BSR MAC CE). A format of the long truncated BSR MAC CE is the same as a format of the long BSR MAC CE, as shown in FIG. 1(a), but content of a sub-packet header of the long truncated BSR MAC CE is different from content of the sub-packet header of the long BSR MAC CE. In addition, LCGs to which data included in the long truncated BSR belongs are reported in descending order of priorities of the LCGs. The priorities of the LCGs may be determined based on priorities of LCHs in the LCGs. When the priorities of the LCGs are the same, the LCGs are sorted in ascending order of logical channel group identities (logical channel group identities, LCGIDs).

### 2. Delay status report (delay status report, DSR):

A conventional BSR is used to report only a data amount. However, for some delay-sensitive services, for example, an extended reality (eXtended Reality, XR) service, there is a strict requirement on a delay of air interface transmission. Because the base station cannot learn of delay information of data based on the conventional BSR, transmission of the data cannot be completed within required air interface time by using a resource scheduled by the base station. This not only wastes air interface transmission resources, but also affects user experience. Therefore, currently, a solution is proposed: The terminal device may report a report indicating delay information of to-be-transmitted data, to notify the base station of a transmission delay requirement of the to-be-transmitted data. The report carrying the delay information of the to-be-transmitted data may be referred to as a DSR. It should be noted that the DSR is only an example name currently temporarily provided, and the report carrying the delay information of the to-be-transmitted data may alternatively have another name.

Optionally, the DSR may also indicate a data amount of the to-be-transmitted data. It may be understood that, if the DSR may indicate both the data amount of the to-be-transmitted data and the delay information of the to-be-transmitted data, the DSR may also be understood as a BSR with a new function expanded based on an original function.

Currently, the delay information of the to-be-transmitted data reported by using the DSR may be specifically a remaining transmission delay budget of the data, or may be information such as stored duration or a transmission time point of the to-be-transmitted data. This is not limited in embodiments of this application.

In addition, an end moment of the stored duration may be a current moment of a transmission system, that is, the stored duration is updated (for example, increased) as the system operates. A unit of the stored duration may be any time unit, for example, millisecond, or may be a communication-related unit, for example, one or more of a quantity of slots, a quantity of subframes, and a quantity of system frames. This is not limited in this specification.

Currently, a condition that needs to be met for triggering the DSR has not been determined. The following describes several possible DSR triggering manners. It may be understood that the DSR may alternatively be triggered in another manner. The DSR triggering manner is not limited in embodiments of this application.

Triggering manner 1: The DSR is triggered based on delay information of to-be-transmitted data. In a possible implementation, when the delay information of the to-be-transmitted data reaches a threshold, the DSR is triggered. For example, when stored duration of the to-be-transmitted data reaches (is greater than or equal to) a threshold, the DSR is triggered. For another example, when a remaining transmission delay budget of the to-be-transmitted data reaches (is less than or equal to) a threshold, the DSR is triggered.

Triggering manner 2: The DSR is triggered based on a data amount of to-be-transmitted data. In a possible implementation, when a data amount of data on an LCH or an LCG reaches (is greater than or equal to) a threshold, the DSR is triggered.

Currently, delay information (or delay information and a related data amount) of data that may be included in the DSR is not specified. In a possible implementation, a DSR triggered by data on any LCH/LCG may be used to report delay information (or delay information and a related data amount) of the data on the LCH/LCG that triggers the DSR. Optionally, delay information (or delay information and a related data amount) of data on another LCH/LCG may be further reported.

Currently, how the DSR is specifically used to report the delay information (or the delay information and the data amount) of the to-be-transmitted data is not specified. In a possible implementation, similar to the BSR MAC CE, the DSR may alternatively be a MAC CE, and may be referred to as a DSR MAC CE.

For example, FIG. 1(c) is a diagram of a format of a DSR MAC CE (a packet header of the DSR MAC CE is not shown in FIG. 1(c)). A 1^{st} byte of the DSR MAC CE, that is, first 8 bits (a delay index 0 to a delay index 7 shown in FIG. 1(c)), forms an 8-bit bitmap, where each bit corresponds to a time interval. For example, the time interval indicates a remaining transmission delay budget. A remaining delay budget corresponding to to-be-transmitted data is denoted as x, and time intervals respectively corresponding to the delay index 0 to the delay index 7 may be shown in Table 1.

**Table 1**

| Delay index | Time interval in which x is located |
|---|---|
| 0 | x≤5 ms |
| 1 | x≤10 ms |
| 2 | x≤15 ms |
| 3 | x≤20 ms |
| 4 | x≤25 ms |
| 5 | x≤30 ms |
| 6 | x≤35 ms |
| 7 | x>35 ms |

With reference to Table 1, the delay index 0 may indicate whether the DSR MAC CE includes a data amount of data whose remaining transmission delay budget is less than or equal to 5 ms, the delay index 1 may indicate whether the DSR MAC CE includes a data amount of data whose remaining transmission delay budget is greater than 5 ms and does not exceed 10 ms, and the delay index 2 may indicate whether the DSR MAC CE includes a data amount of data whose remaining transmission delay budget is greater than 10 ms and does not exceed 15 ms. Other delay indexes may be deduced by analogy. In addition, the delay index 7 may indicate whether the DSR MAC CE includes a data amount of data whose remaining transmission delay budget is greater than 35 ms.

When the delay index indicates that the DSR MAC CE includes a data amount corresponding to a remaining transmission delay budget, the DSR MAC CE includes a field (a buffer size shown in FIG. 1(c)) indicating the data amount. For example, when the delay index 0 indicates that the DSR MAC CE includes the data amount of the data whose remaining transmission delay budget is less than or equal to 5 ms, the DSR MAC CE includes a buffer size field corresponding to the delay index 0, for example, a buffer size 1 field. The buffer size 1 field indicates the data amount of the data whose remaining transmission delay budget is less than 5 ms. As shown in FIG. 1(c), when m delay index fields indicate that the DSR MAC CE includes data amounts corresponding to remaining transmission delay budgets, the DSR MAC CE includes m buffer size fields: a buffer size 1 to a buffer size m. Assuming that one buffer size field includes 1 byte, the DSR MAC CE includes m+1 bytes: a byte 2, a byte 3, ..., and a byte m+1.

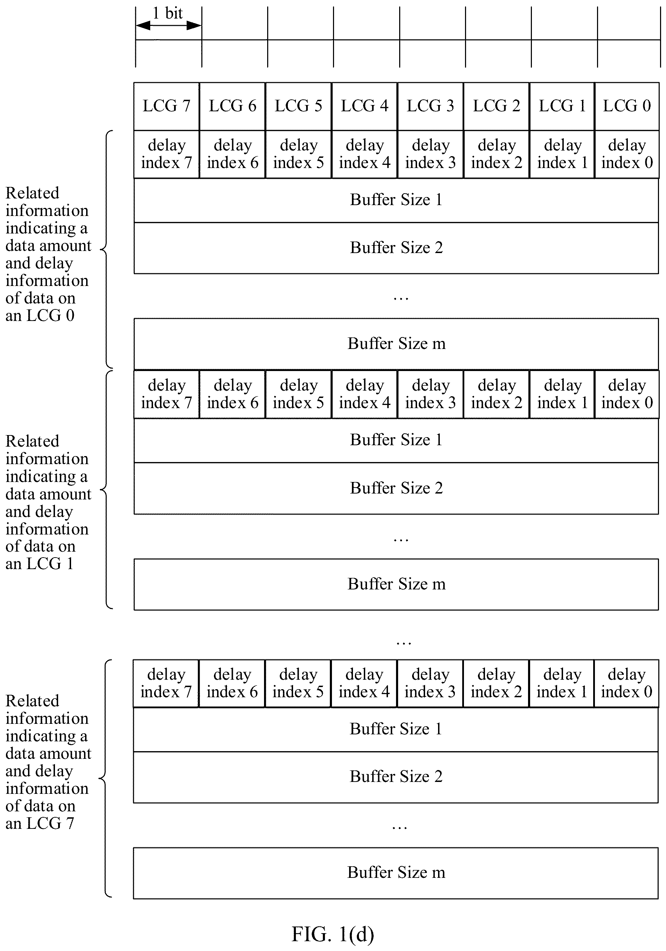

For another example, FIG. 1(d) is a diagram of another format of a DSR MAC CE (a packet header of the DSR MAC CE is not shown in FIG. 1(d)). A 1^{st} byte of the DSR MAC CE includes 8 bits, and each bit corresponds to one LCG (one of an LCG 0 to an LCG 7 shown in FIG. 1(d)) and indicates whether the DSR MAC CE includes a data amount of data on a corresponding LCG. For example, if a bit corresponding to the LCG 0 is '1', the DSR MAC CE includes a data amount of data on the LCG 0. In this case, the DSR MAC CE includes related information indicating a data amount and delay information of the data on the LCG 0. For an indication manner of indicating the data amount and the data amount of the data on the LCG 0, refer to FIG. 1(c). Therefore, the DSR MAC CE shown in FIG. 1(d) may be understood as that when a bit in the 1^{st} byte of the DSR MAC CE indicates that a data amount on a corresponding LCG is to be reported, a byte (for example, a delay index 0 to a delay index 7 shown in FIG. 1(d)) indicating delay information and a field (for example, a buffer size 0 to a buffer size m shown in FIG. 1(d)) indicating the data amount that correspond to the LCG appear in the DSR MAC CE. When a bit in the 1^{st} byte of the DSR MAC CE indicates that no data amount on the corresponding LCG is to be reported, a byte indicating delay information and a field indicating the data amount do not appear.

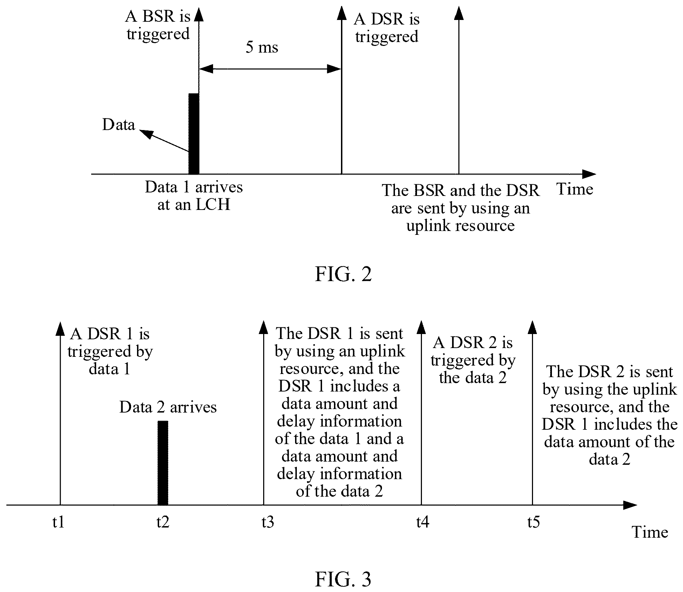

Based on the descriptions of the BSR and the DSR, in some cases, the terminal device may face a problem that a data amount of same data is reported by using the BSR and the DSR, resulting in a waste of resources. For example, if a data amount and delay information of to-be-transmitted data are reported by using the DSR, in some case, the data amount of the same data may be reported by using the BSR and the DSR, resulting in a waste of resources. FIG. 2 is a possible diagram of a case in which a same data amount is reported by using a BSR and a DSR. As shown in FIG. 2, when data 1 arrives at one LCH, a BSR may be triggered based on the triggering manner 1, and the BSR includes a data amount of the data 1. A DSR may be triggered by the data 1 after a period of time. For example, after 5 ms, the DSR is triggered because a remaining transmission delay budget of the data is less than a preset threshold, or the DSR is triggered because stored duration exceeds a preset threshold. The DSR triggered by the data 1 includes the data amount and delay information of the data 1. However, a time domain position of an uplink resource scheduled by the base station is after the triggering of the DSR. Therefore, the terminal device may send both the BSR and the DSR by using the uplink resource (for example, a MAC PDU). In other words, the uplink resource may include both the BSR and the DSR. In this case, both the BSR and the DSR include the data amount of the data 1, that is, the data amount of the data 1 is repeatedly reported, causing a waste of resources.

It may be understood that a problem of repeatedly reporting a data amount may occur not only in a case in which a BSR and a DSR are triggered by same data, but also in another case. For example, a BSR is triggered by data on an LCH in an LCG 0, and a DSR is triggered by data on an LCH in an LCG 1. It is assumed that the terminal device determines to report a long BSR and a DSR. Because the long BSR includes data amounts of to-be-transmitted data on all LCGs, the long BSR also includes data amounts included in the DSR. Consequently, data amounts of some data are repeatedly reported, causing a waste of transmission resources.

In addition, a problem of resource waste caused by repeatedly reporting a data amount may also occur when the terminal device sends a plurality of DSRs. For example, as shown in FIG. 3, a DSR 1 is triggered by data 1 (not marked in FIG. 3) at a moment t1 (for example, a remaining transmission delay budget of the data 1 is less than a threshold), data 2 arrives at the terminal device at a subsequent moment t2, and the terminal device sends the DSR 1 at a moment t3 by using an uplink resource 1 scheduled by the base station. The DSR 1 includes data amounts of the data 1 and the data 2 and delay information of the data 1 and the data 2 in this case. A DSR 2 is triggered by the data 2 at a moment t4 (for example, a remaining transmission delay budget of the data 2 is less than a threshold), and the terminal device sends the DSR 2 at a moment t5 by using an uplink resource 2 scheduled by the base station. The DSR 2 includes the data amount of the data 2 and the delay information of the data 2 in this case, and may further include the data amount and the delay information of the data 1. It can be learned that the data amount of the same data is repeatedly reported by using the DSR 1 and the DSR 2.

To resolve a problem that a data amount may be repeatedly reported in different status reports, embodiments of this application provide a data amount reporting method, an apparatus, and a system. The following describes the technical solutions in embodiments of this application with reference to the accompanying drawings in embodiments of this application.

In descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural. In addition, in the descriptions of this application, "a plurality of" means two or more unless otherwise specified. "At least one of the following items (pieces)" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In embodiments of this application, "indication" may include a direct indication and an indirect indication, or may include an explicit indication and an implicit indication. Information indicated by a piece of information (for example, the following first indication information or second indication information) is referred to as to-be-indicated information. In a specific implementation process, the to-be-indicated information is indicated in a plurality of manners, for example, but not limited to, the to-be-indicated information may be directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, specified in a protocol), to reduce indication overheads to some extent. In addition, a common part of all pieces of information may be identified and indicated in a unified manner, to reduce indication overheads caused by separately indicating same information.

Furthermore, specific indication manners may alternatively be various existing indication manners, for example, but not limited to, the foregoing indication manners and various combinations thereof. For details of the various indication manners, refer to the conventional technology. Details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

In addition, the to-be-indicated information may be sent as a whole, or may be divided into a plurality of pieces of sub-information for sending separately; and sending periodicities and/or sending occasions of these pieces of sub-information may be the same or different. A specific sending method is not limited in embodiments of this application. The sending periodicities and/or the sending occasions of these pieces of sub-information may be predefined, for example, predefined according to a protocol; or may be configured by a transmit end device by sending configuration information to a receive end device.

In embodiments of this application, "predefined, "predefinition, "preconfigured", or "preconfiguration" may be implemented by pre-storing corresponding code or a corresponding table in a device, or may be implemented in another manner for indicating related information, for example, may be burnt into the device before delivery. A specific implementation is not limited in embodiments of this application. "Storage" may be storage in one or more memories. The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in embodiments of this application.

The "protocol" in embodiments of this application may be a protocol family in the communication field, a standard protocol with a frame structure similar to a protocol family, or a related protocol applied to a future communication system. This is not specifically limited in embodiments of this application.

In embodiments of this application, descriptions such as "when", "in a case", and "if" all mean that a device performs corresponding processing in a specific objective situation, but are not intended to limit time, do not require that the device has a determining action during implementation, and do not mean any other limitation.

The technical solutions provided in this application may be applied to various communication systems. The communication system may be a 3rd generation partnership project (3rd generation partnership project, 3GPP) communication system, for example, a 4th generation (4th generation, 4G) long term evolution (long term evolution, LTE) system, a 5th generation (5th generation, 5G) mobile communication system and an evolved system thereof, a vehicle-to-everything (vehicle-to-everything, V2X) system, an LTE and new radio (new radio, NR) hybrid networking system, a device-to-device (device-to-device, D2D) system, a machine-to-machine (machine-to-machine, M2M) communication system, an internet of things (Internet of Things, IoT), or another next-generation communication system.

It should be noted that a network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

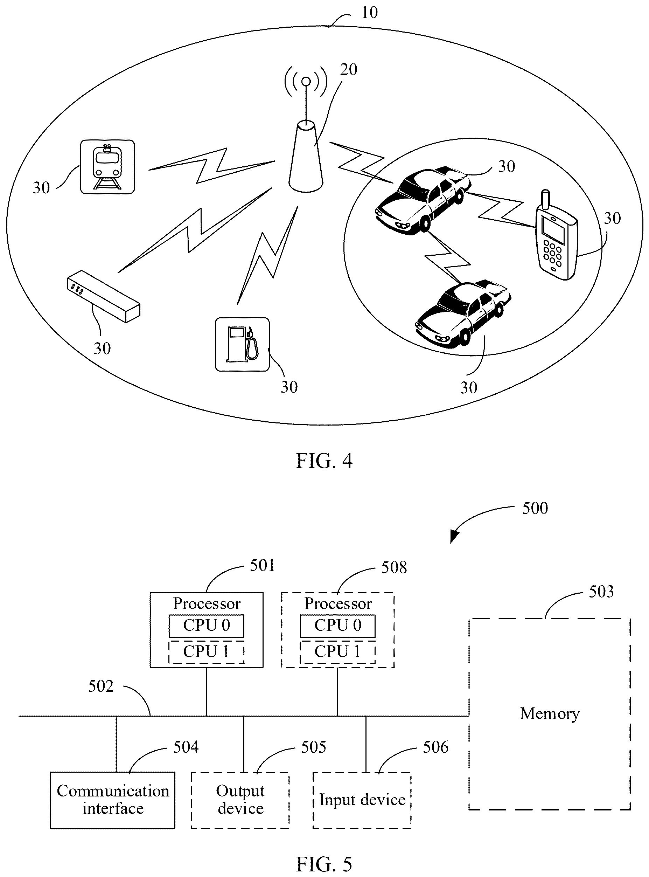

FIG. 4 is a possible and non-limiting diagram of a system according to an embodiment of this application. As shown in FIG. 4, the communication system 10 includes a second device 20 and a first device 30. The second device 20 may communicate with the first device 30 in a wireless manner.

It may be understood that FIG. 4 is merely a diagram, and does not constitute a limitation on a quantity of second devices 20 or first devices 30 in the communication system 10. The communication system 10 may include at least one second device 20 and at least one first device 30.

Optionally, different second devices 20 may communicate with each other. Optionally, different first devices 30 may communicate with each other. The second device 20 and/or the first device 30 may be at fixed positions, or may be movable.

For example, the second device 20 shown in FIG. 4 interacts with any first device 30. In a possible design, the first device 30 triggers a first status report, where the first status report includes a data amount and delay information of first data, and the first data is to-be-transmitted data of the first device. In addition, the first device 30 triggers a second status report, where the second status report includes a data amount of second data, and the second data is to-be-transmitted data of the first device. The first device 30 sends a target status report to the second device 20 by using a first transmission resource, where the target status report includes the data amount of the first data. Specific implementations and technical effects of the solution are described in detail in subsequent method embodiments, and details are not described herein.

For example, the second device 20 shown in FIG. 4 interacts with any first device 30. In another possible design, the first device 30 sends a third status report to the second device 20. When a remaining transmission delay budget of third data is less than a first threshold, if the third status report does not include a data amount of the third data, the first device 30 triggers a fourth status report, where the fourth status report includes the data amount of the third data. Specific implementations and technical effects of the solution are described in detail in subsequent method embodiments, and details are not described herein.

Optionally, the second device 20 and the first device 30 in this embodiment of this application may be deployed on land, including an indoor or outdoor device, a handheld device, or a vehicle-mounted device; may be deployed on a water surface; or may be deployed on an aircraft, a balloon, or an artificial satellite in the air. Application scenarios of the second device 20 and the first device 30 are not limited in embodiments of this application.

Optionally, the second device 20 and the first device 30 in this embodiment of this application may communicate with each other over a licensed spectrum (licensed spectrum), may communicate with each other over an unlicensed spectrum (unlicensed spectrum), or may communicate with each other over both the licensed spectrum and the unlicensed spectrum. The second device 20 and the first device 30 may communicate with each other on a spectrum below 6 gigahertz (gigahertz, GHz), may communicate with each other on a spectrum above 6 GHz, or may communicate with each other on both a spectrum below 6 GHz and a spectrum above 6 GHz. A spectrum resource used between the second device 20 and the first device 30 is not limited in embodiments of this application.

Optionally, the second device 20 in this embodiment of this application may be a network device. The first device 30 may be a terminal device.

Optionally, the network device in this embodiment of this application is a device that connects the terminal device to a wireless network. The network device in embodiments of this application may include various forms of base stations (base station), for example, may be a macro base station, a micro base station (also referred to as a small cell), a relay station, an access point, a transmitting point (transmitting point, TP), an evolved NodeB (evolved NodeB, eNB), a transmission reception point (transmission reception point, TRP), a next generation NodeB (next generation NodeB, gNB) in a 5G mobile communication system, a device that implements a base station function in a communication system evolved after 5G, a mobile switching center, or a device that bears a base station function in device-to-device (Device-to-Device, D2D), V2X, machine-to-machine (machine-to-machine, M2M) communication; may be a network device in a non-terrestrial network (non-terrestrial network, NTN) communication system, that is, may be deployed on a high altitude platform or a satellite; or may be a module or a unit that completes some functions of a base station, for example, may be a central unit (central unit, CU) or a distributed unit (distributed unit, DU) in a cloud access network (cloud radio access network, C-RAN) system. A specific technology and a specific device form that are used by the network device are not limited in embodiments of this application. All or some functions of the network device may alternatively be implemented by using a software function running on hardware, or may be implemented by using a virtualization function instantiated on a platform (for example, a cloud platform). In this application, unless otherwise specified, the network device is a radio access network (radio access network, RAN) device.

Optionally, the terminal device in embodiments of this application may be a device having a wireless transceiver function, or may be referred to as a terminal (terminal). The terminal device may be specifically user equipment (user equipment, UE), an access terminal, a subscriber unit (subscriber unit), a subscriber station, a mobile station (mobile station), customer-premises equipment (customer-premises equipment, CPE), a remote station, a remote terminal, a mobile device, a mobile terminal, a user terminal, a wireless communication device, a user agent, a user apparatus, or the like. The terminal device may alternatively be a satellite phone, a cellular phone, a smartphone, a cordless phone, a session initiation protocol (session initiation protocol, SIP) phone, a wireless data card, a wireless modem, a tablet computer, a computer having a wireless transceiver function, a wireless local loop (wireless local loop, WLL) station, a personal digital assistant (personal digital assistant, PDA), a handheld device having a wireless communication function, a computing device or another processing device connected to a wireless modem, a vehicle-mounted device, a communication device carried on a high-altitude aircraft, a wearable device, a drone, a robot, a smart point of sale (point of sale, POS) machine, a device in machine type communication, a terminal device in D2D, a vehicle-mounted terminal device in V2X, an on-board unit (on-board unit, OBU), a vehicle-mounted communication terminal (telematics box, T-box), a vehicle or road side unit (road side unit, RSU), a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. A specific technology and a specific device form that are used for the terminal device are not limited in embodiments of this application. For example, the terminal device may alternatively be a chip or a module. All or some functions of the terminal device may alternatively be implemented by using a software function running on hardware, or may be implemented by using a virtualization function instantiated on a platform (for example, a cloud platform).

Optionally, the first device 30 or the second device 20 may use a structure of a communication apparatus 500 shown in FIG. 5. As shown in FIG. 5, the communication apparatus 500 includes a processor 501, a communication line 502, and at least one communication interface (in FIG. 5, only an example in which a communication interface 504 is included is used for description). Optionally, the communication apparatus 500 may further include a memory 503.

The processor 501 may be a general-purpose central processing unit (central processing unit, CPU), a microprocessor, an application-specific integrated circuit (application-specific integrated circuit, ASIC), or one or more integrated circuits configured to control execution of programs in the solutions in this application.

The communication line 502 may include a path for information transmission between the foregoing components.

The communication interface 504 is configured to communicate with another device or a communication network by using any transceiver-type apparatus, for example, an Ethernet, a radio access network, or a wireless local area network (wireless local area network, WLAN).

The memory 503 may be a read-only memory (read-only memory, ROM), another type of static storage device that can store static information and instructions, a random access memory (random access memory, RAM), or another type of dynamic storage device that can store information and instructions; or may be an electrically erasable programmable read-only memory (electrically erasable programmable read-only memory, EEPROM), a compact disc read-only memory (compact disc read-only memory, CD-ROM), another compact disc storage, an optical disc storage (including a compact disc, a laser disc, an optical disc, a digital versatile disc, a Blu-ray disc, and the like), a magnetic disk storage medium, another magnetic storage device, or any other medium that can carry or store expected program code in a form of an instruction or a data structure and that can be accessed by a computer, but is not limited thereto. The memory may exist independently and is connected to the processor through the communication line 502. The memory may alternatively be integrated with the processor.

The memory 503 is configured to store computer-executable instructions for executing the solutions of this application, and the processor 501 controls execution of the computer-executable instructions. The processor 501 is configured to execute the computer-executable instructions stored in the memory 503, to implement a method provided in the following embodiments of this application.

Optionally, the computer-executable instructions in embodiments of this application may also be referred to as application program code or computer program code. This is not specifically limited in embodiments of this application.

During specific implementation, in an embodiment, the processor 501 may include one or more CPUs, for example, a CPU 0 and a CPU 1 in FIG. 5.

During specific implementation, in an embodiment, the communication apparatus 500 may include a plurality of processors, for example, the processor 501 and a processor 508 in FIG. 5. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the communication apparatus 500 may further include an output device 505 and an input device 506. The output device 505 communicates with the processor 501, and may display information in a plurality of manners. For example, the output device 505 may be a liquid crystal display (liquid crystal display, LCD), a light emitting diode (light emitting diode, LED) display device, a cathode ray tube (cathode ray tube, CRT) display device, a projector (projector), or the like. The input device 506 communicates with the processor 501, and may receive user input in a plurality of manners. For example, the input device 506 may be a mouse, a keyboard, a touchscreen device, a sensor device, or the like.

It may be understood that the structure shown in FIG. 5 does not constitute a specific limitation on the communication apparatus 500. For example, in some other embodiments of this application, the communication apparatus 500 may include more or fewer components than those shown in the figure, some components may be combined, some components may be split, or the components may be differently arranged. The components shown in the figure may be implemented by hardware, software, or a combination of software and hardware.

With reference to FIG. 4 and FIG. 5, the following describes, by using an example in which the second device 20 and any first device 30 shown in FIG. 4 interact with each other, the data amount reporting method provided in embodiments of this application.

It should be noted that names of messages between network elements, names of parameters in the messages, or the like in the following embodiments of this application are merely examples, and there may be other names in a specific implementation. This is not specifically limited in embodiments of this application.

It should be noted that a granularity, a size, or a unit of data in the following embodiments of this application is not limited. The data may be one data unit, or may include a plurality of data units. For example, data in the following embodiments of this application may be a service data unit (service data unit, SDU), a PDU, a protocol data unit set (PDU set), or a data burst (data burst). The PDU includes an SDU and a packet header of a corresponding layer. For example, a packet data convergence protocol (packet data convergence protocol, PDCP) PDU is obtained by adding a PDCP packet header to a PDCP SDU through a PDCP layer. The PDU set includes at least one PDU, and these PDUs carry an information unit generated by an application (or an application layer). For example, a video frame has a large data amount, and usually needs to be divided into a plurality of PDUs for transmission. The plurality of PDUs may form one PDU set. A data burst may be understood as a group of PDUs generated and sent by an application (or an application layer) in short time, and these PDUs may be from one or more PDU sets.

It should be noted that a unit of duration in the following embodiments of this application, for example, valid transmission duration, stored duration, or a remaining transmission delay budget, may be a time unit such as second or millisecond, may be a communication time unit such as a slot, a subframe, or a system frame, or may be a combination of the two units. This is not limited in embodiments of this application.

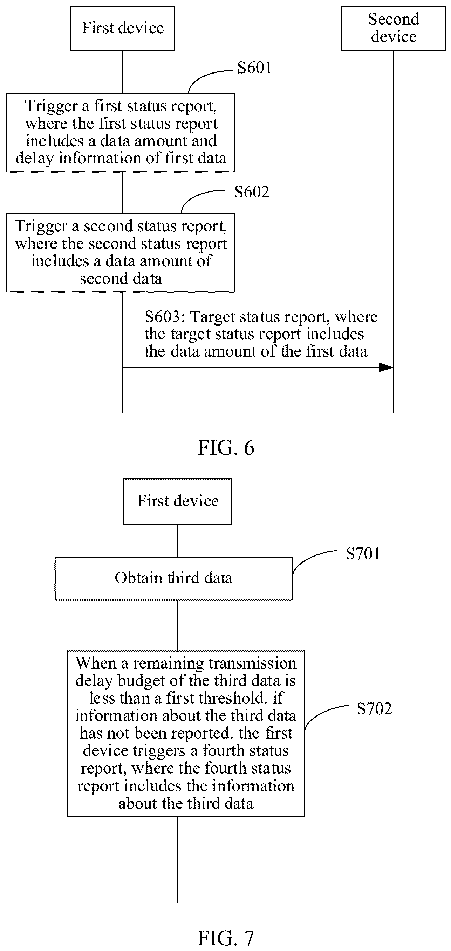

FIG. 6 shows a data amount reporting method according to an embodiment of this application. In FIG. 6, an example in which a first device and a second device are used as execution bodies of interaction examples is used to illustrate the method. However, the execution bodies of the interaction examples are not limited in this application. For example, the first device in FIG. 6 may alternatively be a module, for example, a chip, a chip system, or a processor, used in the first device, or may be a logical node, a logical module, or software that can implement all or some node functions of the first device. The second device in FIG. 6 may alternatively be a module, for example, a chip, a chip system, or a processor, used in the second device, or may be a logical node, a logical module, or software that can implement all or some functions of the second device. The data amount reporting method includes the following steps.

S601: The first device triggers a first status report, where the first status report includes a data amount and delay information of first data, and the first data is to-be-transmitted data of the first device.

S602: The first device triggers a second status report, where the second status report includes a data amount of second data, and the second data is to-be-transmitted data of the first device.

S603: The first device sends a target status report by using a first transmission resource, where the target status report includes the data amount of the first data. Correspondingly, the second device receives the target status report by using the first transmission resource.

It should be noted that a time sequence between S601 and S602 shown in FIG. 6 is merely an example of a possible time sequence. The time sequence between S601 and S602 is not limited in this embodiment of this application. Optionally, S601 may be performed before S602. In other words, the first device may first trigger the first status report, and then trigger the second status report. Alternatively, S601 and S602 may be simultaneously performed. In other words, the first device may simultaneously trigger the first status report and the second status report. Alternatively, S602 may be performed before S601. In other words, the first device may first trigger the second status report, and then trigger the first status report.

Based on the data amount reporting method provided in this embodiment of this application, when a plurality of status reports are triggered, the data amount of the first data can be reported by using one status report, to avoid repeatedly reporting the data amount of the first data.

The following separately describes S601 to S603 in detail.

In S601, optionally, the first status report may further include delay information and a data amount of other data.

After the first status report is triggered, a data amount and delay information that are included in the triggered first status report may be determined by the first device based on a data amount and delay information of current data and according to a preset rule when a resource (in this embodiment of this application, the resource is the first transmission resource, and details are not described herein) used to send the first status report arrives. For example, it is assumed that it is specified in advance that the first status report may be used to report a data amount and delay information of data on any LCH. After triggering the first status report, when assembling/generating a MAC PDU, the first device determines that both a current LCH 1 and a current LCH 2 have to-be-transmitted data. In this case, the triggered first status report includes a data amount and delay information of the data on the current LCH 1 and a data amount and delay information of the data on the current LCH 2. For another example, it is assumed that it is specified in advance that the first status report may be used to report a data amount and delay information of data on an LCG 1. After triggering the first status report, when assembling/generating a MAC PDU, the first device determines that both a current LCH 1 and a current LCH 2 have to-be-transmitted data, where the LCH 1 belongs to the LCG 1, and the LCH 2 belongs to an LCG 2. In this case, the triggered first status report includes a data amount and delay information of the data on the current LCH 1.

In this embodiment of this application, delay information of data included in a status report (for example, the first status report) may indicate a transmission delay requirement of the data. For example, delay information of data included in the first status report may be information such as stored duration of the data, a remaining transmission delay budget of the data, or a transmission time point of the data. This is not limited in this embodiment of this application. The transmission time point of the data may be a time point at which a transmission delay requirement of the data may be determined, for example, may be a corresponding time point (which may alternatively be understood as an end moment of the transmission delay budget of the data) when the remaining transmission delay budget of the data expires. The transmission time point of the data may be an absolute time point, for example, several minutes and seconds, or may be a communication time point like a system frame number (system frame number, SFN), a subframe number (subframe number), or a slot number (slot number).

Specific definitions of the remaining transmission delay budget and the stored duration are described in detail below. Details are not described herein.

It should be noted that a specific manner of reporting delay information and/or a data amount of data by using a status report (for example, the first status report, or the second status report below) is not limited in this embodiment of this application. In other words, a specific form of the data amount and/or the delay information of the data in the status report is not limited in this embodiment of this application, which may alternatively be understood as that a structure or a format of the status report is not limited in this embodiment of this application.

For example, the first status report may be a DSR.

It may be understood that, in this embodiment of this application, the DSR is an example name of a status report including delay information of to-be-transmitted data. In actual application, the status report including the delay information of the to-be-transmitted data may alternatively have another name. This is not limited in this embodiment of this application.

It should be noted that a manner of carrying the status report (for example, the first status report, or the second status report below) is not limited in this embodiment of this application. For example, the status report may be a MAC CE (if the status report is a DSR, the status report may be referred to as a DSR MAC CE in this case, or if the status report is a BSR, the status report may be referred to as a BSR MAC CE in this case). Alternatively, the status report may be user assistance information (UE assistance information, UAI). Alternatively, the status report may be uplink control information (uplink control information, UCI), or the status report may be carried in other information or signaling.

The following describes several possible implementations of triggering the first status report provided in this embodiment of this application. It may be understood that the first status report may alternatively be triggered in another manner. A manner of triggering the first status report is not limited in this embodiment of this application.

Triggering manner 1: The first status report is triggered based on delay information of to-be-transmitted data. In a possible implementation, when the delay information of the to-be-transmitted data reaches a threshold, the first status report is triggered. For example, when stored duration of the to-be-transmitted data reaches (is greater than or equal to) a threshold, the first status report is triggered. For another example, when a remaining transmission delay budget of the to-be-transmitted data reaches (is less than or equal to) a threshold, the first status report is triggered.

Triggering manner 2: The first status report is triggered based on a data amount of to-be-transmitted data. In a possible implementation, when a data amount of data on an LCH or an LCG reaches (is greater than or equal to) a threshold, the first status report is triggered.

Optionally, the threshold used to trigger the first status report may be preconfigured in the first device, may be configured by using higher layer signaling (for example, an RRC message), or may be predefined in a protocol. A manner in which the first device obtains the threshold is not specifically limited in this embodiment of this application.

Optionally, if the threshold used to trigger the first status report is related to a delay, a unit of the threshold may be any time unit, for example, millisecond, or may be a communication-related unit, for example, a slot, a subframe, or a system frame. This is not specifically limited in this embodiment of this application. When the threshold used to trigger the first status report is related to a data amount, a unit of the threshold may be a bit, a byte, or the like. This is not specifically limited in this embodiment of this application.

In S602, for the data amount of the second data included in the second status report, optionally, the second data may be data different from the first data (or the second data does not include the first data). Alternatively, the second data may include the first data.

Optionally, the second status report may further include delay information of the second data.

In this embodiment of this application, delay information of data included in the second status report may indicate a transmission delay requirement of the data. For example, the delay information of the data included in the second status report may be information such as stored duration of the data, a remaining transmission delay budget of the data, or a transmission time point of the data. This is not limited in this embodiment of this application.

Optionally, the second status report may further include a data amount and/or delay information of other data.

After the second status report is triggered, a data amount included in the triggered second status report and delay information that may be included in the triggered second status report may be determined by the first device based on a data amount of current data (may alternatively be determined based on delay information of the current data) and according to a preset rule when a resource (in this embodiment of this application, the resource is the first transmission resource, and details are not described herein) used to send the second status report arrives. For details, refer to the foregoing descriptions of the data amount and the delay information included in the triggered first status report.

For example, the second status report may be a BSR. In this case, the second status report does not include delay information of data. Alternatively, the second status report may be a DSR. In this case, the second status report includes delay information of data.

Optionally, if the second status report is the BSR, for a manner of triggering the second status report, refer to the foregoing descriptions of the plurality of BSR triggering manners. Details are not described herein again.

Optionally, if the second status report is the DSR, for a manner of triggering the second status report, refer to the foregoing descriptions of the triggering manner of the first status report. Details are not described herein again.

In S603, the first transmission resource may be used to send at least one status report (for example, the first status report or the second status report), to report a data amount of the to-be-transmitted data of the first device.

A start time domain position of the first transmission resource may be after a time point at which the first status report is triggered and a time point at which the second status report is triggered. After triggering the first status report and the second status report, the first device may determine the target status report based on the triggered first status report and the triggered second status report, and send the target status report by using the first transmission resource. The target status report is a status report that includes the data amount of the first data and that is in the at least one status report sent by the first device by using the first transmission resource, or the target status report is used to report the data amount of the first data. Further, to avoid reporting a repeated data amount, there may be one target status report sent by using the first transmission resource.

Optionally, the first transmission resource may be an uplink resource scheduled by the second device for the first device.

It should be noted that, in this embodiment of this application, that after the first status report is triggered, the first status report includes the data amount of the first data means that when the first device determines the target status report to be sent by using the first transmission resource, the triggered first status report includes the data amount of the first data. It may be understood that triggering a status report and sending the status report are two steps, and the triggered status report may not be sent, for example, the triggered status report may be canceled. Therefore, that the triggered first status report includes the data amount of the first data does not mean (that is, cannot be equivalent to) that the data amount of the first data is reported by using the first status report. In addition, if it is determined to send the first status report by using the first transmission resource, the data amount of the first data is not necessarily reported in the first status report, or the sent first status report does not necessarily include the data amount of the first data. For example, when assembling/generating a MAC PDU carried in the first transmission resource, the first device may change a data amount originally included in the triggered first status report. Therefore, that the triggered first status report includes the data amount of the first data may be understood as that when the first device determines the target status report, the triggered first status report logically includes the data amount of the first data, rather than reporting the data amount of the first data by using the first status report.

Similarly, after the first status report is triggered, the first status report includes the delay information of the first data, but this does not mean that the delay information of the first data is reported by using the first status report.

Similarly, that after the second status report is triggered, the second status report includes the data amount of the second data means that when the first device determines the target status report to be sent by using the first transmission resource, the triggered second status report includes the data amount of the second data. It may be understood that the triggered second status report is not necessarily sent by using the first transmission resource. Therefore, the triggered second status report includes the data amount of the second data, but this does not mean that the data amount of the second data is reported by using the second status report. In addition, if it is determined to send the second status report by using the first transmission resource, the data amount of the second data is not necessarily reported in the second status report, or the sent second status report does not necessarily include the data amount of the second data. Therefore, that the triggered second status report includes the data amount of the second data may be understood as that when the first device determines the target status report, the triggered second status report logically includes the data amount of the second data, rather than reporting the data amount of the second data by using the second status report.

For example, if the first status report and the second status report are carried by using a MAC CE, when assembling or generating a MAC PDU carried in the first transmission resource, the first device may determine the target status report. The target status report may be understood as a status report that the first device determines to place into the MAC PDU (or multiplex into the MAC PDU) when assembling or generating the MAC PDU. In other words, the target status report sent by using the first transmission resource (or referred to as the target status report included in the first transmission resource) is a status report included in the MAC PDU (or a status report placed into/multiplexed into the MAC PDU). For ease of understanding, the following describes the following embodiments of this application by using an example in which the first transmission resource is used to carry a MAC PDU, and the first status report and the second status report are carried by using a MAC CE.

In this embodiment of this application, based on different scenarios, the first device may determine the target status report in different manners. The following describes several possible manners of determining the target status report.

Manner 1: The target status report is determined based on priorities of status reports.

In an application scenario of Manner 1, the first transmission resource may include one status report. The first device may select, from the first status report and the second status report, one status report to be sent by using the first transmission resource, and the status report is the target status report.

In Manner 1, when the first device assembles/generates a MAC PDU, a data amount included in the target status report placed into the MAC PDU is a data amount included in the triggered first status report or the triggered second status report. For example, if the first device determines the first status report as the target status report, the target status report placed into the MAC PDU is the first status report, and includes the data amount of the first data. Alternatively, if the first device determines the second status report as the target status report, the target status report placed into the MAC PDU is the second status report, and includes the data amount of the second data.

It may be understood that, because the target status report in Manner 1 may be either the first status report or the second status report, in the application scenario of Manner 1, the second data may include the first data.

In Manner 1, priorities may be respectively set for the first status report and the second status report, and the first device may select, based on a priority of the first status report and a priority of the second status report, a status report to be sent by using the first transmission resource. In other words, the target status report is a higher-priority one of the first status report and the second status report.

Optionally, in Manner 1, the priorities set for the first status report and the second status report may be set based on types of status reports, that is, different priorities are set for different types of status reports. In this case, the first status report may be a DSR, and the second status report may be a BSR. Specifically, the second status report may be any one of a regular BSR, a periodic BSR, or a padding BSR.

In a possible implementation, different priorities may be respectively set for the DSR and the BSR. For example, a priority higher than that of the BSR may be set for the DSR. When the first device assembles or generates a MAC PDU, if there are the triggered BSR and the triggered DSR (that is, there are the triggered first status report and the triggered second status report), the MAC PDU includes the DSR and does not include the BSR (that is, the first status report is the target status report to be sent by using the first transmission resource). On the contrary, a priority lower than that of the BSR may be set for the DSR. When the first device assembles or generates a MAC PDU, if there are the triggered BSR and the triggered DSR, the MAC PDU includes the BSR and does not include the DSR (that is, the second status report is the target status report to be sent by using the first transmission resource).

In addition, if there are a plurality of triggered BSRs when the first device assembles a MAC PDU, the first device may select, based on priorities of different types of existing BSRs, a BSR to be placed into the MAC PDU. For example, the priorities of different types of BSRs may be set as follows: A priority of a regular BSR and a priority of a periodic BSR are higher than a priority of a padding BSR.

In another possible implementation, priorities may be respectively set for a DSR and each type of BSR. For example, if a DSR, a regular BSR, a periodic BSR, and a padding BSR coexist, priorities may be set for the four BSRs. Optionally, in this scenario, the DSR may be understood as a BSR. For example, assuming that the DSR is referred to as a delay BSR, there are four types of BSRs: the delay BSR, the regular BSR, the periodic BSR, and the padding BSR. Priorities may be set for the four BSRs.

For example, a priority of the DSR may be set to be higher than a priority of the regular BSR, a priority of the periodic BSR, and a priority of the padding BSR, and the priority of the regular BSR and the priority of the periodic BSR are set to be higher than the priority of the padding BSR. In this case, if there are the triggered DSR and any one of the triggered regular BSR, the triggered periodic BSR, or the triggered padding BSR, the MAC PDU includes a DSR MAC CE and does not include a BSR MAC CE corresponding to the regular BSR, the periodic BSR, or the padding BSR.

For another example, a priority of the padding BSR may be set to be higher than a priority of the DSR, and a priority of the regular BSR and a priority of the periodic BSR may be set to be higher than the priority of the padding BSR. In this case, if there are the triggered regular BSR or the triggered periodic BSR and the triggered DSR, the MAC PDU includes a BSR MAC CE corresponding to the regular BSR or the periodic BSR and does not include a DSR MAC CE. If there are the triggered padding BSR and the triggered DSR, the MAC PDU includes a BSR MAC CE corresponding to the padding BSR and does not include a DSR MAC CE. If there are the triggered regular BSR or the triggered periodic BSR, the triggered padding BSR, and the triggered DSR, the MAC PDU includes a MAC CE corresponding to the regular BSR or the periodic BSR and does not include a BSR MAC CE corresponding to the padding BSR and a DSR MAC CE.

For another example, a priority between a priority of the regular BSR and a priority of the padding BSR may be set for the DSR, that is, the priority of the regular BSR and a priority of the periodic BSR are higher than the priority of the DSR, and the priority of the DSR is higher than the priority of the padding BSR. In this case, if there are the triggered regular BSR or the triggered periodic BSR and the triggered DSR, the MAC PDU includes the regular BSR or the periodic BSR and does not include the DSR. If there are the triggered padding BSR and the triggered DSR, the MAC PDU includes a DSR MAC CE and does not include a MAC CE corresponding to the padding BSR. If there are the triggered regular BSR or the triggered periodic BSR, the triggered padding BSR, and the triggered DSR, the MAC PDU includes a BSR MAC CE corresponding to the regular BSR or the periodic BSR and does not include a BSR MAC CE corresponding to the padding BSR and the DSR.

Optionally, the process of selecting, based on the priorities, a MAC CE that is multiplexed into a MAC PDU from MAC CEs respectively corresponding to the regular BSR, the periodic BSR, the padding BSR, and the DSR may occur when the first device assembles or generates the MAC PDU.

Optionally, the priority of the first status report and the priority of the second status report may be preconfigured, for example, may be configured before the first device is delivered, may be configured by using semi-static signaling (for example, an RRC message), may be predefined in a protocol, or may be configured in another manner. This is not limited in this embodiment of this application.

Optionally, a logical channel multiplexing priority may be further set for the first status report and/or the second status report. The logical channel multiplexing priority is used to determine an order of performing multiplexing into a transmission resource (for example, a MAC PDU). For example, when one MAC PDU needs to include a plurality of functional MAC CEs (for example, a BSR MAC CE and a MAC CE used to report a timing advance), when the MAC PDU is assembled or generated, the functional MAC CEs need to be placed into the MAC PDU based on a sequence of logical channel multiplexing priorities.

Optionally, the logical channel multiplexing priority of the second status report may be the same as a logical channel multiplexing priority of any BSR. For example, the logical channel multiplexing priority of the second status report may be the same as a logical channel multiplexing priority of the regular BSR or the periodic BSR, or the logical channel multiplexing priority of the second status report may be the same as a logical channel multiplexing priority of the padding BSR.

Alternatively, the logical channel multiplexing priority of the second status report may be different from a logical channel multiplexing priority of a BSR. Optionally, the logical channel multiplexing priority of the second status report may be higher than the logical channel multiplexing priority of the BSR. For example, the logical channel multiplexing priority of the second status report may be higher than a logical channel multiplexing priority of the regular BSR, a logical channel multiplexing priority of the periodic BSR, and a logical channel multiplexing priority of the padding BSR. Alternatively, the logical channel multiplexing priority of the second status report may be lower than a logical channel multiplexing priority of any BSR. For example, the logical channel multiplexing priority of the second status report may be lower than a logical channel multiplexing priority of the regular BSR, a logical channel multiplexing priority of the periodic BSR, and a logical channel multiplexing priority of the padding BSR.

Optionally, the logical channel multiplexing priority of the first status report may be the same as a logical channel multiplexing priority of any BSR, or the logical channel multiplexing priority of the first status report may be different from a logical channel multiplexing priority of a BSR. The logical channel multiplexing priority of the first status report may be higher than the logical channel multiplexing priority of the BSR, or may be lower than the logical channel multiplexing priority of the BSR. For the logical channel multiplexing priority of the first status report, refer to the descriptions of the logical channel multiplexing priority of the second status report. Details are not described herein again.

The logical channel multiplexing priorities of the first status report and the second status report may be the same, or may be different.

Optionally, the logical channel multiplexing priority of the first status report or the logical channel multiplexing priority of the second status report may be preconfigured, for example, may be configured before the first device is delivered, may be configured by using semi-static signaling (for example, an RRC message), may be predefined in a protocol, or may be configured in another manner. This is not limited in this embodiment of this application.

In Manner 1, that the first device determines not to send a status report by using the first transmission resource may be understood as canceling sending of the status report, or canceling the triggered status report.

Manner 2: One of the first status report and the second status report is used to report the data amount of the first data.

In an application scenario of Manner 2, the first transmission resource may include a plurality of status reports. In other words, both the first status report and the second status report may be sent by using the first transmission resource. However, to avoid repeatedly reporting the data amount of the first data, only one of the first status report and the second status report can be used to report the data amount of the first data. In other words, the data amount of the first data is reported in one of the first status report and the second status report, and the data amount of the first data is not reported in the other of the first status report and the second status report. In this scenario, the target status report may be understood as either the first status report or the second status report that is used to report the amount of the first data, or may be understood as that the target status report includes the first status report and the second status report, and one of the first status report and the second status report is used to report the data amount of the first data.

It may be understood that in Manner 2, one of the first status report and the second status report is used to report the data amount of the first data, and a data amount included in the triggered first status report and a data amount included in the triggered second status report are not limited when the first device assembles/generates a MAC PDU after the first status report and the second status report are triggered.

In a possible implementation, a logical channel may be configured to report delay information (which may alternatively be understood as that whether to report delay information is configured for the logical channel). If the logical channel is configured to report delay information, a data amount of data on the logical channel may be reported in a DSR, and the data amount of the data on the logical channel is not reported in a BSR. For example, the data amount of the data on the logical channel is reported only in the DSR. Optionally, delay information of the data on the logical channel may also be reported in the DSR.

For ease of description below, a logical channel that is configured to report delay information is referred to as a first logical channel, and another logical channel that is different from the first logical channel and that is not configured to report delay information is referred to as a second logical channel. Further, a data amount of data on the second logical channel may be reported in the BSR, and is not reported in the DSR. For example, the data amount of the data on the second logical channel is reported only in the BSR. Therefore, in this implementation, a data amount of data can be reported in one of the DSR and the BSR, and is not reported in the other of the DSR and the BSR based on a logical channel to which the data belongs.

For example, the first device has two LCHs: an LCH 0 and an LCH 1. The LCH 0 is configured to report delay information, and the LCH 1 is not configured to report delay information. If a DSR is triggered by the LCH 0, and a BSR is triggered by the LCH 1, a MAC PDU sent on the first transmission resource may include both the BSR and the DSR. The DSR includes a data amount of data on an LCH (for example, the LCH 0) that is configured to report delay information, and the BSR includes a data amount of data on an LCH (for example, the LCH 1) that is not configured to report delay information and does not include the data amount of the data on the LCH 0. For another example, if a BSR is triggered by the LCH 1, and a DSR is not triggered by the LCH 0, a MAC PDU sent on the first transmission resource may include the BSR. However, the BSR does not include a data amount of data on the LCH 0 but includes a data amount of data on an LCH (for example, the LCH 1) that is not configured to report delay information. In this case, if a plurality of LCHs that are not configured to report delay information have to-be-transmitted data, and LCGs to which the plurality of LCHs belong are different (in this case, if the LCH 1 and an LCH 2 that have to-be-transmitted data are not configured to report delay information, and an LCG to which the LCH 2 belongs and an LCG to which the LCH 1 belongs are different), the first device reports a long BSR. Otherwise, the first device reports a short BSR.

It should be noted that in this embodiment of this application, "a BSR or a DSR is triggered by an LCH" and similar descriptions may be understood as that the BSR or the DSR is triggered by data on the LCH, or may be understood as that the data on the LCH meets a trigger condition of the BSR or the DSR. In addition, "a BSR or a DSR is triggered by an LCG" and similar descriptions may be understood as that the BSR or the DSR is triggered by data on an LCH included in the LCG, or may be understood as that data on an LCH included in the LCG meets a trigger condition of the BSR or the DSR.

Similarly, a logical channel (which may be referred to as the second logical channel) may alternatively be configured to not report delay information, and another logical channel that is different from the second logical channel and that is not configured to not report delay information is referred to as the first logical channel. Alternatively, both a logical channel (which may be referred to as the first logical channel) may be configured to report delay information and a logical channel (which may be referred to as the second logical channel) may be configured to not report delay information.

Optionally, there may be one or more first logical channels. Optionally, there may also be one or more second logical channels. A quantity of first logical channels or a quantity of second logical channels is not limited in this embodiment of this application.

Whether to report delay information may be preconfigured for the logical channel, for example, may be configured before the first device is delivered, may be configured by using semi-static signaling (for example, an RRC message), may be indicated by a dynamic message (for example, a MAC CE or DCI), may be predefined in a protocol, or may be configured in another manner. This is not limited in this embodiment of this application. For example, the first device may obtain first configuration information, where the first configuration information is used to configure a first logical channel to report delay information. The first device may determine, based on the first configuration information, that in a plurality of logical channels configured by the first device, a data amount and delay information of data on the first logical channel need to be reported by using a DSR. Optionally, the first configuration information may be sent by the second device to the first device.

In the implementation, whether to report delay information is configured at a granularity of an LCH. For example, when configuring a parameter of an LCH by using an RRC message, the second device configures whether to report delay information for the LCH, and a data amount is reported by using a BSR or a DSR at a granularity of an LCG. Because one LCG may include a plurality of LCHs, optionally, when a logical channel is configured to report delay information, another LCH in an LCG to which the logical channel belongs may also be configured to report delay information. Alternatively, when a logical channel is configured to not report delay information, another LCH in an LCG to which the logical channel belongs may also be configured to not report delay information. In other words, each LCH in an LCG may be a first logical channel, or each LCH in an LCG may be a second logical channel. This optional solution may alternatively be understood as that whether to report delay information is configured at a granularity of an LCG, or whether to report delay information is configured for an LCG. In other words, in the optional solution, when one LCG is configured to report delay information, it may be understood as that any LCH in the LCG is configured to report delay information, or it may be understood as that all LCHs in the LCG are configured to report information. In addition, in the optional solution, when an LCH is configured to report delay information, it may be understood as that an LCG to which the LCH belongs is configured to report delay information.

Optionally, in the application scenario of Manner 2, the first status report may be a DSR, and the second status report may be a BSR. It may be understood that, regardless of whether the first data belongs to the first logical channel or the second logical channel, the data amount of the first data may be reported in one of the first status report and the second status report, and is not reported in the other of the first status report and the second status report.

Specifically, if the first data belongs to the first logical channel, the data amount of the first data may be reported in the first status report, and the data amount of the first data is not reported in the second status report. In this case, the triggered first status report that includes the data amount of the first data may be used as the target status report, placed into a MAC PDU, and sent by using the first transmission resource. Optionally, if the second data does not include the first data, the triggered second status report that includes the data amount of the second data may also be placed into the MAC PDU and sent by using the first transmission resource. In other words, in this case, the second data is data different from the first data (or the second data does not include the first data). Optionally, the delay information of the first data may also be reported in the first status report.

If the first data belongs to the second logical channel, the data amount of the first data may be reported in the second status report, and the data amount of the first data is not reported in the first status report. In other words, in this case, the second data includes the first data.

Optionally, a data amount of data on the first logical channel may not be reported by using BSRs of all types. In this case, regardless of which type of BSR the second status report is, the data amount of the data on the first logical channel is not reported in the second status report. Alternatively, a data amount of data on the first logical channel may not be reported in one or more types of BSRs (or may be reported in one or more types of the BSRs). In this case, it may be determined, based on which type of BSR the second status report is, whether the second status report may be used to report the data amount of the data on the first logical channel.

For example, the data amount of the data on the first logical channel may not be reported by using a regular BSR. In addition, this example may alternatively be understood as that the data amount of the data on the first logical channel may be reported by using a periodic BSR or a padding BSR, and is not reported by using a regular BSR. For example, when a BSR MAC CE that is in a MAC PDU and that is sent by the first device corresponds to the regular BSR, the BSR MAC PDU does not include a data amount of to-be-transmitted data on an LCH that is configured to report delay information. For example, an LCH 0 that is configured to report delay information has to-be-transmitted data. If the regular BSR is triggered in this case, for example, the regular BSR is triggered by new data on another LCH, when a BSR MAC CE corresponding to the regular BSR is sent, the BSR MAC CE does not include a data amount of the data on the LCH 0. In addition, if the periodic BSR or the padding BSR is triggered, a BSR MAC CE corresponding to the periodic BSR or the padding BSR may be used to report the data amount of the data on the LCH 0. In addition, in this example, for the triggered regular BSR, if more than one LCG that is not configured to report delay information has data to be transmitted, a format of the BSR MAC CE corresponding to the regular BSR may be a long BSR, for reporting a data amount of the data on all the LCGs that are not configured to report delay information. If no more than one LCG that is not configured to report delay information has data to be transmitted, a format of the BSR MAC CE corresponding to the regular BSR is a short BSR.

For another example, the data amount of the data on the first logical channel may not be reported by using a periodic BSR. In addition, this example may alternatively be understood as that the data amount of the data on the first logical channel may be reported by using a regular BSR or a padding BSR, and is not reported by using a periodic BSR. For example, an LCH 0 that is configured to report delay information has to-be-transmitted data. If the periodic BSR is triggered when a periodic timer expires, when a BSR MAC CE corresponding to the periodic BSR is sent, the BSR MAC CE does not include a data amount of the data on the LCH 0. In addition, if the regular BSR or the padding BSR is triggered, a BSR MAC CE corresponding to the regular BSR or the padding BSR may be used to report the data amount of the data on the LCH 0. In addition, in this example, for the triggered periodic BSR, if more than one LCG that is not configured to report delay information has data to be transmitted, a format of the BSR MAC CE corresponding to the periodic BSR may be a long BSR, for reporting a data amount of the data on all the LCGs that are not configured to report delay information. If no more than one LCG that is not configured to report delay information has data to be transmitted, a format of the BSR MAC CE corresponding to the periodic BSR is a short BSR.

For another example, the data amount of the data on the first logical channel may not be reported by using a padding BSR. In addition, this example may alternatively be understood as that the data amount of the data on the first logical channel may be reported by using a regular BSR or a periodic BSR, and is not reported by using a padding BSR. For example, an LCH 0 that is configured to report delay information has to-be-transmitted data. If the first device triggers the padding BSR when sending a MAC PDU, when the first device sends a BSR MAC CE corresponding to the padding BSR, the BSR MAC CE does not include a data amount of the data on the LCH 0. In addition, if the regular BSR or the periodic BSR is triggered, a BSR MAC CE corresponding to the regular BSR or the periodic BSR may be used to report the data amount of the data on the LCH 0.

For another example, the data amount of the data on the first logical channel may not be reported by using a regular BSR and a periodic BSR. In addition, this example may alternatively be understood as that the data amount of the data on the first logical channel may be reported by using a padding BSR, and is not reported by using a regular BSR and a periodic BSR. For example, when a BSR MAC CE sent by the first device corresponds to the regular BSR or the periodic BSR, the BSR MAC CE does not include a data amount of to-be-transmitted data on an LCH that is configured to report delay information. For example, an LCH 0 that is configured to report delay information has to-be-transmitted data. If the regular BSR or the periodic BSR is triggered in this case, for example, the regular BSR is triggered by new data on another LCH or the periodic BSR is triggered when a periodic BSR timer expires, when the first device sends a BSR MAC CE corresponding to the regular BSR or the periodic BSR, the BSR MAC CE does not include a data amount of the data on the LCH 0. In addition, if the padding BSR is triggered, a BSR MAC CE corresponding to the padding BSR may be used to report the data amount of the data on the LCH 0. In addition, in this example, for the triggered regular BSR and the triggered periodic BSR, if more than one LCG that is not configured to report delay information has data to be transmitted, formats of BSR MAC CEs corresponding to the regular BSR and the periodic BSR may be long BSRs, for reporting a data amount of the data on all the LCGs that are not configured to report delay information. If no more than one LCG that is not configured to report delay information has data to be transmitted, formats of BSR MAC CEs corresponding to the regular BSR and the periodic BSR may be short BSRs.

The data may be data available for transmission, for example, to-be-transmitted data. Optionally, in this embodiment of this application, a process in which the first device determines whether a data amount of data on an LCH or an LCG that is configured to report delay information is included in a BSR MAC CE may occur when the first device prepares to assemble/generate a MAC PDU including the BSR MAC CE.

It should be understood that, as described in the foregoing embodiments of this application, it is jointly determined, depending on a case in which a condition for whether a logical channel to which data belongs is configured to report delay information may also coexist with another condition, a data amount of data on an LCH/LCG that may be reported in a BSR MAC CE.

In addition, optionally, a BSR may not be triggered by the first data. For example, if the first logical channel is configured to report delay information, a BSR (which may be one or more types of BSRs, for example, a regular BSR) may not be triggered by data (for example, the first data) on the first logical channel. Alternatively, when the first logical channel is configured to report delay information, a BSR (which may be one or more types of BSRs, for example, a regular BSR) is not triggered according to an existing standard criterion. The optional solution may alternatively be understood as a new BSR trigger condition or a new trigger condition added based on an existing BSR trigger condition. The added new condition may be understood as that if an LCH or an LCG to which data belongs is not configured to report delay information, a BSR may be triggered by the data. For example, the new BSR trigger condition may be as follows.

If new uplink data arrives at an LCH in an LCG, the new uplink is available for a MAC entity, the LCH is not configured to report delay information, and a priority of the LCH is higher than a priority of any other LCH having to-be-transmitted data or any LCH in any other LCG has no uplink data that can be sent, a BSR is triggered. The BSR triggered in this manner may be understood as a regular BSR. That data is available to the MAC entity may be understood as that the data can be used, obtained, or allocated by the MAC entity. For example, the MAC entity may multiplex the data into a MAC PDU.

Optionally, the first data may alternatively be a generic term of data on a plurality of logical channels or logical channel groups that are configured to report delay information.

Manner 3: When assembling/generating the MAC PDU carried in the first transmission resource, the first device determines, based on data amounts respectively included in the first status report and the second status report, whether to send one of the first status report and the second status report or both the first status report and the second status report. If one status report is sent, the status report is used to report the data amount of the first data, and the status report is the target status report. If two status reports are sent, one status report is used to report the data amount of the first data, and the other status report is not used to report the data amount of the first data. In this case, the target status report may be understood as either the first status report or the second status report that is used to report the amount of the first data, or may be understood as that the target status report includes the first status report and the second status report, and one of the first status report and the second status report is used to report the data amount of the first data.

In an application scenario of Manner 3, the first transmission resource may include one status report, or may include a plurality of status reports. When the plurality of status reports are included, each of the plurality of status reports is used to report a data amount of different data. When there are a plurality of triggered status reports simultaneously, the data amount of the first data may be reported in the first status report, or may be reported in the second status report. However, performing reporting in the plurality of status reports causes a waste of transmission resources. Therefore, when the first transmission resource may include the plurality of status reports, a status report in which the data amount of the first data is transmitted needs to be determined.

In a possible implementation, when assembling/generating a MAC PDU, if the first device determines that both the triggered first status report and the triggered second status report include the data amount of the first data (that is, in this case, the second data includes the first data), the first device may select one of the first status report and the second status report to be sent by using the first transmission resource, and the status report sent by using the first transmission resource is the target status report. Optionally, sending the first status report or the second status report may be determined based on a type of the status report. For example, when a BSR and a DSR include a data amount of same data, whether to send the DSR or the BSR may be configured. In this case, the first device may select, based on whether the first status report is the DSR or the BSR, and whether the second status report is the BSR or the DSR, a status report to be sent by using the first transmission resource.

For example, when an LCH or an LCG is configured to report delay information, when the first device assembles/generates a MAC PDU, if there are a triggered BSR and a triggered DSR, data on the LCH or the LCG may be reported in the DSR (for example, the first status report), and is not reported in the BSR (for example, the second status report).

Optionally, if the triggered BSR and the triggered DSR include a data amount of same data, whether the data amount is reported by using the DSR or the BSR may be preconfigured, for example, preconfigured before the first device is delivered, may be configured by using a semi-static message (for example, an RRC message), may be dynamically indicated, may be predefined in a protocol, or may be configured in another manner. This is not limited in this embodiment of this application.

Optionally, when the triggered BSR and the triggered DSR include the data amount of the same data, in a configuration of sending the DSR or sending the BSR, the BSR may be BSRs of all types, or may be one or more types of a plurality of BSRs. For example, the following may be preconfigured: When the DSR and a BSR MAC CE corresponding to a regular BSR include a data amount of same data, the data amount of the data is sent in a DSR MAC CE. In this case, if there are both the triggered DSR and a triggered periodic BSR or a triggered padding BSR, and the triggered periodic BSR or the triggered padding BSR and the triggered DSR include a data amount of same data, the data amount of the data may be sent in a BSR MAC CE corresponding to the periodic BSR or the padding BSR, or may be sent in the DSR MAC CE, that is, the BSR MAC CE corresponding to the periodic BSR or the padding BSR and the DSR MAC CE may be sent together and used to report the data amount of the same data. Similarly, the regular BSR in this example may alternatively be replaced with the periodic BSR or the padding BSR. Correspondingly, if a BSR of another type and the DSR include a data amount of same data, the BSR of another type and the DSR may be sent together.

Optionally, when generating a MAC CE, if the first device determines that both the triggered first status report and the triggered second status report include the data amount of the first data, the first device may further determine whether all data amounts included in a status report are included in another status report, that is, determine whether a data amount that can be reported in one status report can completely include a data amount that can be reported in another status report. If the first device determines that the data amount that can be reported in the status report can completely include the data amount that can be reported in the another status report, the first device may determine the status report that can completely include the data amount that can be reported in the another status report as the target status report to be sent by using the first transmission resource, that is, the first transmission resource does not include a status report in which all data amounts that can be reported are included in the target status report. For example, it is assumed that there are a triggered BSR and a triggered DSR when a MAC PDU is assembled/generated, and the triggered BSR and the triggered DSR include a data amount of same data. If the data amount may be completely reported by using one status report, for example, the DSR, because the triggered BSR does not include a data amount of any other data, the BSR does not need to be sent, and the first device may not send the BSR by using the first transmission resource. The same data may be data from a same LCH or LCG or different LCHs or LCGs.

In this implementation, that the first device determines not to send a status report by using the first transmission resource may be understood as canceling sending of the status report, or canceling the triggered status report.

In another possible implementation, when assembling/generating a MAC PDU, if the first device determines that both the first status report and the second status report include the data amount of the first data (in this case, the data amount of the second data included in the second status report includes the data amount of the first data, that is, the second data includes the first data), the first device may place the two status reports into the MAC PDU, reports the data amount of the first data in one of the two status reports, and does not report the data amount in the other status report. In this case, the target status report may be understood as either the first status report or the second status report that is used to report the amount of the first data, or may be understood as that the target status report includes the first status report and the second status report, and one of the first status report and the second status report includes the data amount of the first data.

It may be understood that, in this implementation, all the data amounts reported in the status report for reporting the data amount of the first data may be unchanged compared with the data amount included in the triggered status report when the first device assembles/generates the MAC PDU. Compared with the data amount included in the triggered status report when the first device assembles/generates the MAC PDU, the data amount reported in the another status report no longer includes the data amount of the first data (which may alternatively be understood as that the first device "discards" the data amount of the first data in the status report when assembling/generating the MAC PDU, so that the data amount of the first data is not reported in the status report). In addition, when a status report is not used to report the data amount of the first data, a format of the status report may change. For example, when the first device assembles/generates a MAC PDU, a format of a BSR MAC CE corresponding to the second status report should be a long BSR. Because the first device determines to report the data amount of the first data by using the first status report, the data amount of the first data is not reported in the second status report, and after the second status report is not used to report the data amount of the first data, the second status report may include only a data amount of data on one LCG, the format of the BSR MAC CE corresponding to the second status report may be changed to a short BSR, and the first device places the second status report into the MAC PDU.

Optionally, whether the data amount of the first data is reported in the first status report or the second status report may be determined based on a type of the status report. For example, when a BSR and a DSR include a data amount of same data, whether the data amount of the same data is reported in the DSR or the BSR may be configured. In this case, the first device may select, based on whether the first status report is the DSR or the BSR and whether the second status report is the BSR or the DSR, one status report to report the data amount of the first data. Alternatively, determining may be performed based on a logical channel to which data belongs. For example, whether the logical channel to which the data belongs is configured to report delay information is used as an example. If it is determined that both the triggered first status report and the triggered second status report include the data amount of the first data on a first logical channel, the data amount of the first data may be reported by using the first status report, for example, the DSR, and the second status report is not used to report the data amount of the first data. In addition, if a second logical channel has to-be-transmitted data in this case, a data amount of the to-be-transmitted data on the second logical channel may be reported by using the second status report, for example, the BSR.

Optionally, when the BSR and the DSR include the data amount of the same data, whether the data amount of the same data is reported by using the DSR or the BSR may be preconfigured, for example, preconfigured before the first device is delivered, may be configured by using a semi-static message (for example, an RRC message), may be dynamically indicated, may be predefined in a protocol, or may be configured in another manner. This is not limited in this embodiment of this application.

Optionally, if a status report for reporting the data amount of the first data is a BSR, the BSR may be one or more of a regular BSR, a periodic BSR, or a padding BSR.

Optionally, if the status report for reporting the data amount of the first data is the BSR, the delay information of the first data may be reported in a DSR. Alternatively, if a status report for reporting the data amount of the first data is a DSR, the delay information of the first data may also be reported in the DSR.

In another possible implementation, if one of the first status report and the second status report includes the data amount of the first data, and the other status report does not include the data amount of the first data, the first device may send both the first status report and the second status report by using the first transmission resource.

The status report including the data amount of the first data is the target status report. For example, when assembling/generating a MAC PDU, the first device determines that the first status report includes the data amount and the delay information of the first data, and the data amount of the second data included in the second status report is different from the data amount of the first data (or the second data is different from the first data/the second data does not include the first data). In this case, the first device may place both the first status report and the second status report into the MAC PDU.

In addition, if the first transmission resource, for example, a MAC PDU, has only one status report, for example, a BSR, regardless of whether a logical channel or a logical channel group to which the first data belongs is configured to report delay information, the data amount of the data may be reported in the status report. For example, the logical channel to which the first data belongs is configured to report delay information. If the MAC PDU includes only the second status report, for example, the BSR, the second status report may also be used to report the data amount of the first data.

Manner 4: A triggered one of the first status report and the second status report is canceled, and the first device sends the other reserved status report by using the first transmission resource, where the reserved status report is the target status report.

In an application scenario of Manner 4, both the first status report and the second status report include the data amount of the first data. In other words, the data amount of the second data included in the second status report includes the data amount of the first data, that is, the second data includes the first data.

In a possible implementation, canceling the first status report or the second status report may be determined based on a type of the status report. Optionally, it may be set that if there are a triggered BSR and a triggered DSR, the triggered DSR may be canceled for the triggered BSR, or the triggered BSR may be canceled for the triggered DSR.

Optionally, whether the triggered BSR is canceled for the triggered DSR or the triggered DSR is canceled for the triggered BSR may be preconfigured, may be configured by using a semi-static message (for example, an RRC message), may be predefined in a protocol, or may be configured in another manner. This is not limited in this embodiment of this application.

An example in which the triggered BSR is canceled for the triggered DSR is used. If the DSR is not triggered earlier than the BSR, for example, the BSR is triggered earlier than the DSR or the BSR and the DSR are triggered simultaneously, the triggered BSR may be directly canceled for the triggered DSR (or the triggered BSR may be canceled after the DSR is triggered). For example, if a BSR is triggered at a first time point, and a DSR is triggered at a second time point later than the first time point, the BSR triggered at the first time point may be canceled for the DSR. In this case, a MAC PDU includes only the DSR and does not include the BSR. Alternatively, if the DSR is triggered earlier than the BSR, after the BSR is triggered, the triggered BSR may also be canceled for the triggered DSR. For example, a DSR is triggered at a first time point, and a BSR is triggered at a second time point later than the first time point. In this case, the BSR triggered at the second time point may also be canceled for the DSR. In this case, a MAC PDU includes only the DSR and does not include the BSR.

For a case in which the triggered BSR is canceled for the triggered DSR, in a possible case, before the triggered DSR is sent, any triggered BSR may be canceled for the triggered DSR. From a perspective of a result, it may alternatively be understood as that after the DSR is triggered, the BSR may no longer be triggered before the DSR is sent. Alternatively, when the triggered DSR and the triggered BSR include a data amount of same data, the triggered BSR may be canceled for the triggered DSR.

Optionally, the triggered BSR that may be canceled for the triggered DSR may be a BSR of each type (or BSRs of all types may be canceled for the triggered DSR), or may be one or more types of a plurality of BSRs.

For example, at least one triggered BSR of a regular BSR, a periodic BSR, and a padding BSR may be canceled for the triggered DSR. For example, the triggered regular BSR may be canceled for the triggered DSR. In this case, the triggered periodic BSR or the triggered padding BSR may not be canceled for the triggered DSR. Alternatively, the triggered periodic BSR may be canceled for the triggered DSR. In this case, the triggered regular BSR or the triggered padding BSR may not be canceled for the triggered DSR. Alternatively, the triggered padding BSR may be canceled for the triggered DSR. In this case, the triggered regular BSR or the triggered periodic BSR may not be canceled for the triggered DSR.

Optionally, a type of a BSR that may be canceled for the triggered DSR may be preconfigured, may be configured by using a semi-static message (for example, an RRC message), may be predefined in a protocol, or may be configured in another manner. This is not limited in this embodiment of this application.

Because the padding BSR is triggered by a quantity of remaining resources after multiplexing is performed into a MAC PDU according to a logical channel multiplexing priority, a MAC layer or the first device should first determine whether the MAC PDU includes a DSR, and then determine whether to trigger the padding BSR. Therefore, a possible implementation in which the triggered padding BSR is canceled for the triggered DSR is as follows: When the MAC PDU includes the DSR, the padding BSR is no longer triggered. For example, after determining that the MAC PDU includes the DSR, the first device no longer continues to determine, based on a remaining data amount in the MAC PDU, whether to trigger the padding BSR. For another example, after a MAC CE and data are completely multiplexed into the MAC PDU according to a sequence of logical channel multiplexing priorities, when a quantity of remaining padding bits is greater than or equal to a size of a BSR MAC CE and a sub-packet header of the MAC CE, if the MAC PDU includes the DSR, the padding BSR is not triggered.

Optionally, for a case in which the triggered regular BSR is canceled for the triggered DSR, only a regular BSR triggered by a same LCH or a same LCG may be canceled for the triggered DSR, rather than a regular BSR triggered by another LCH or LCG.

For example, it is assumed that the first device has two LCHs (an LCH 0 and an LCH 1), where the LCH 0 belongs to an LCG 0, and the LCH 1 belongs to an LCG 1. If a DSR is triggered by the LCH 0 after a regular BSR is triggered by the LCH 0, the triggered regular BSR may be canceled for the triggered DSR, that is, the MAC PDU includes only the DSR. If a DSR is triggered by the LCH 0 after a regular BSR is triggered by the LCH 1, the triggered regular BSR triggered by the LCH 1 is not canceled for the DSR triggered by the LCH 0, that is, the MAC PDU may include both the BSR and the DSR. For another example, it is assumed that there is also an LCH 2 in the LCG 0. If there is a BSR triggered by the LCH 2 when the DSR is triggered by the LCH 0, the BSR triggered by the LCH 2 may be canceled for the triggered DSR.

Optionally, for a case in which the regular BSR triggered by the same LCH or the same LCG may be canceled for the triggered DSR, and the triggered regular BSR is later than the triggered DSR, from a perspective of a result, it may alternatively be understood as that after the DSR is triggered by the same LCH or the same LCG, the regular BSR is no longer triggered by the same LCH or the same LCG.

That a BSR and a DSR are triggered by a same LCG may be that the BSR and the DSR are triggered by a same LCH in the LCG, or may be that the BSR and the DSR are triggered by different LCHs in the LCG. This is not limited in this embodiment of this application.

Alternatively, for a case in which the triggered regular BSR is canceled for the triggered DSR, a regular BSR triggered by an LCH that is configured to report delay information may be canceled for the triggered DSR. For example, the first device has three LCHs: an LCH 0, an LCH 1, and an LCH 2. The LCH 0 and the LCH 1 are configured to report delay information, and the LCH 2 is not configured to report delay information. If a DSR is triggered by the LCH 0 and a BSR is triggered by the LCH 1, the triggered BSR may be canceled for the triggered DSR. In this case, the MAC PDU includes only the DSR. If a DSR is triggered by the LCH 0 and a BSR is triggered by the LCH 2, the BSR triggered by the LCH 2 may not be canceled for the triggered DSR. In this case, the MAC PDU includes the DSR and the BSR.

Alternatively, for a case in which the triggered regular BSR is canceled for the triggered DSR, a BSR triggered by any LCH or LCG may be canceled for the triggered DSR.

Optionally, different implementations of canceling the triggered BSR for the triggered DSR may also be applicable to a case in which the triggered DSR is canceled for the triggered BSR. For example, if there are a triggered BSR and a triggered DSR, the triggered DSR may be canceled for the triggered BSR. Optionally, if the BSR is not triggered earlier than the DSR, for example, the DSR is triggered earlier than the BSR or the BSR and the DSR are triggered simultaneously, the triggered DSR may be directly canceled for the triggered BSR (or the triggered DSR may be canceled after the BSR is triggered). For example, if a DSR is triggered at a first time point, and a BSR is triggered at a second time point later than the first time point, the DSR triggered at the first time point may be canceled for the BSR. In this case, the MAC PDU includes only the BSR and does not include the DSR. Alternatively, if the BSR is triggered earlier than the DSR, after the DSR is triggered, the triggered DSR may also be canceled for the triggered BSR. For example, a BSR is triggered at a first time point, and a DSR is triggered at a second time point later than the first time point. In this case, the DSR triggered at the second time point may also be canceled for the BSR. In this case, the MAC PDU includes only the BSR and does not include the DSR.

For a case in which the triggered DSR is canceled for the triggered BSR, in a possible case, before the triggered BSR is sent, any triggered DSR may be canceled for the triggered BSR. From a perspective of a result, it may alternatively be understood as that after the BSR is triggered, the DSR may no longer be triggered before the BSR is sent. Alternatively, when the triggered DSR and the triggered BSR include a data amount of same data, the triggered DSR may be canceled for the triggered BSR.

Optionally, for a case in which the triggered DSR is canceled for the triggered BSR, a BSR for which the triggered DSR may be canceled may be any BSR, or may be one or more types of a plurality of BSRs.

For example, the triggered DSR may be canceled for at least one of a triggered regular BSR, a triggered periodic BSR, and a triggered padding BSR. For example, the triggered DSR may be canceled for the triggered regular BSR. In this case, the triggered DSR may not be canceled for the triggered periodic BSR or the triggered padding BSR. Alternatively, the triggered DSR may be canceled for the triggered periodic BSR. In this case, the triggered DSR may not be canceled for the triggered regular BSR or the triggered padding BSR. Alternatively, the triggered DSR may be canceled for the triggered padding BSR. In this case, the triggered DSR may not be canceled for the triggered regular BSR or the triggered periodic BSR.

Optionally, a type of a BSR for which the triggered DSR may be canceled may be preconfigured, may be configured by using a semi-static message (for example, an RRC message), may be predefined in a protocol, or may be configured in another manner. This is not limited in this embodiment of this application.

Optionally, for a case in which the triggered DSR is canceled for the triggered BSR, the triggered DSR may be canceled for the triggered BSR when the following conditions are met: When the triggered DSR does not include all data amounts of data on an LCH that is configured to report delay information, the triggered DSR may be canceled for the triggered BSR. Optionally, if the triggered DSR does not meet the condition, that is, the triggered DSR includes all the data amounts of the data on the LCH that is configured to report delay information, the triggered DSR may not be canceled for the triggered BSR.

Optionally, the triggered BSR is canceled for the triggered DSR or the triggered DSR is canceled for the triggered BSR when a MAC PDU is assembled/generated, or at any moment at which there are both the triggered BSR and the triggered DSR. This is not limited in this embodiment of this application.

The foregoing describes several possible implementations in which the first device determines the target status report. After determining the target status report, the first device may send the target status report by using the first transmission resource. Correspondingly, the second device may receive the target status report on the first transmission resource, and determine, by using the target status report, the data amount of the first data to be transmitted by the first device.

**In** addition, optionally, if after signaling or data that needs to be sent by using the first transmission resource (for example, an uplink MAC PDU) is multiplexed into the first transmission resource according to a logical channel priority, the first transmission resource may completely accommodate a DSR MAC CE and a MAC CE packet header corresponding to the DSR MAC CE, a periodic BSR timer may also be started or restarted.

Optionally, if after signaling or data that needs to be sent by using the first transmission resource (for example, an uplink MAC PDU) is multiplexed into the first transmission resource according to a logical channel priority, the first transmission resource may completely accommodate a DSR MAC CE and a MAC CE packet header corresponding to the DSR MAC CE, a retransmission BSR timer may also be started or restarted.

Based on the foregoing embodiments, when triggering a plurality of status reports including data amounts, the first device reports the data amount of the first data by using one status report in a plurality of manners in which a priority may be set for a status report, whether to report delay information is configured for a logical channel, the first device flexibly selects a status report for reporting the data amount of the first data, and another triggered status report is canceled for a triggered status report, thereby avoiding sending a plurality of status reports for reporting a same data amount, and reducing uplink resource overheads.

**In** addition, an embodiment of this application further provides a status report triggering method, to avoid repeatedly reporting information about data. In FIG. 7, an example in which the first device is used as an execution body is used to illustrate the method. However, the execution body of the example is not limited in this application. For example, the first device in FIG. 7 may alternatively be a module, for example, a chip, a chip system, or a processor, used in the first device, or may be a logical node, a logical module, or software that can implement all or some node functions of the first device. The method includes the following steps.

S701: The first device obtains third data.

S701 may alternatively be understood as that the third data arrives at the first device. The third data is uplink data that can be sent, that is, to-be-transmitted data of the first device.

S702: When a remaining transmission delay budget of the third data is less than a first threshold, if information about the third data has not been reported, the first device triggers a fourth status report, where the fourth status report includes the information about the third data.

The third data is the to-be-transmitted data of the first device. In other words, S702 may be understood as follows: When a remaining transmission delay budget of to-be-transmitted data (namely, the third data) is less than the first threshold, if information about the to-be-transmitted data has not been reported, the fourth status report may be triggered.

Optionally, the information about the third data may include delay information (for example, information such as the remaining transmission delay budget and stored duration) and/or a data amount of the third data.

An example in which the information about the to-be-transmitted data is reported by using a status report is used. For example, before the remaining transmission delay budget of the third data is less than the first threshold, a status report sent by the first device is referred to as a third status report, and S702 may be understood as follows: When the remaining transmission delay budget of the third data is less than the first threshold, if the information about the third data has not been reported by using the third status report, the first device triggers the fourth status report, where the fourth status report includes the information about the third data.

For example, the third status report may be a BSR, or may be a DSR.

Optionally, a sending moment of the third status report may be after the third data arrives at the first device.

In addition, S702 may alternatively be understood as follows: When a remaining transmission delay budget of to-be-transmitted data (namely, the third data) is less than the first threshold, if information about the to-be-transmitted data has been reported (for example, reported by using the third status report), or if a previously sent status report (namely, the third status report) includes a data amount of the to-be-transmitted data, the fourth status report is not triggered.

In other words, a trigger condition of the fourth status report may be as follows.

A remaining transmission delay budget of to-be-transmitted data (namely, the third data) is less than the first threshold, and the information about the third data has not been reported (for example, has not been reported by using the third status report).

For example, the fourth status report may be a DSR or a BSR.

Optionally, whether the fourth status report is triggered may be related to whether the delay information of the third data is reported, that is, the information about the third data includes the delay information of the third data. For example, the delay information of the third data is the remaining transmission delay budget. In this case, S702 may include:

When the remaining transmission delay budget of the third data is less than the first threshold, if the remaining transmission delay budget of the third data has not been reported (for example, has not been reported by using the third status report), the first device triggers the fourth status report, where the fourth status report includes the remaining transmission delay budget of the third data. In addition, when the remaining transmission delay budget of the third data is less than the first threshold, if the remaining transmission delay budget of the third data has been reported (for example, reported by using the third status report), the fourth status report is not triggered.

In other words, the trigger condition of the fourth status report may be: A remaining transmission delay budget of to-be-transmitted data (namely, the third data) is less than the first threshold, and the remaining transmission delay budget of the to-be-transmitted data has not been reported (for example, has not been reported by using the third status report).

Optionally, whether the fourth status report is triggered may be related to whether the data amount of the third data has been reported, that is, the information about the third data includes the data amount of the third data. In this case, S702 may include:

When the remaining transmission delay budget of the third data is less than the first threshold, if the data amount of the third data has not been reported (for example, has not been reported by using the third status report), the first device triggers the fourth status report, where the fourth status report includes the data amount of the third data. In addition, when the remaining transmission delay budget of the third data is less than the first threshold, if the data amount of the third data has been reported (for example, reported by using the third status report), the fourth status report is not triggered.

In other words, the trigger condition of the fourth status report may be: A remaining transmission delay budget of to-be-transmitted data (namely, the third data) is less than the first threshold, and a data amount of the to-be-transmitted data has not been reported (for example, has not been reported by using the third status report).

Optionally, whether the fourth status report is triggered may be related to whether the data amount and the remaining transmission delay budget of the third data have been reported, that is, the information about the third data includes the data amount of the third data and the remaining transmission delay budget of the third data. In this case, S702 may include:

When the remaining transmission delay budget of the third data is less than the first threshold, if the data amount and the remaining transmission delay budget of the third data have not been reported (for example, have not been reported by using the third status report), the first device triggers the fourth status report, where the fourth status report includes the data amount and the remaining transmission delay budget of the third data. In addition, when the remaining transmission delay budget of the third data is less than the first threshold, if the data amount and the remaining transmission delay budget of the third data have been reported (for example, reported by using the third status report), the fourth status report is not triggered.

In other words, the trigger condition of the fourth status report may be: A remaining transmission delay budget of to-be-transmitted data (namely, the third data) is less than the first threshold, and a data amount and the remaining transmission delay budget of the to-be-transmitted data have not been reported (for example, have not been reported by using the third status report).

The first threshold may be preconfigured, for example, configured before the first device is delivered, may be configured by using semi-static signaling (for example, an RRC message), may be indicated by a dynamic message (for example, a MAC CE or DCI), may be predefined in a protocol, or may be configured in another manner. This is not limited in this embodiment of this application.

Optionally, the third data may belong to a third logical channel, and the third logical channel is a logical channel that is configured to report delay information. In other words, if to-be-transmitted data belongs to a logical channel that is configured to report delay information, the fourth status report may be triggered by the to-be-transmitted data; or if to-be-transmitted data does not belong to a logical channel that is configured to report delay information, the fourth status report may not be triggered by the to-be-transmitted data. For example, in this case, the trigger condition of the fourth status report may be understood as follows: When a logical channel (for example, the third logical channel) or a logical channel group to which to-be-transmitted data (for example, the third data) belongs is configured to report delay information, a remaining transmission delay budget of the to-be-transmitted data is less than the first threshold, and information about the to-be-transmitted data has not been reported (for example, has not been reported by using the third status report), the fourth status report is triggered. For details about the logical channel that is configured to report delay information and how to configure the logical channel to report delay information, refer to the foregoing descriptions of the first logical channel. Details are not described herein again. For example, in a possible implementation, the first device may obtain second configuration information (for example, the second configuration information may be sent by the second device), and the second configuration information is used to configure the third logical channel to report delay information.

Optionally, the fourth status report may further include a data amount and/or delay information (for example, a to-be-transmitted delay budget or stored duration) of other to-be-transmitted data.

Optionally, in S702, one of the trigger conditions of the fourth status report, that is, the remaining transmission delay budget of the third data is less than the first threshold, may alternatively be replaced with: The remaining transmission delay budget of the third data is less than or equal to the first threshold. For example, the trigger condition of the fourth status report may be: The remaining transmission delay budget of the third data is less than or equal to the first threshold, and the previously sent third status report does not include the data amount of the third data.

In addition, the fourth status report may alternatively be triggered based on other delay information of the third data. For example, the fourth status report is triggered based on stored duration of the third data. Correspondingly, S702 may be replaced with:

When the stored duration of the third data is greater than (or may be greater than or equal to) a second threshold, if the information about the third data has not been reported (for example, has not been reported by using the third status report), the first device triggers the fourth status report, where the fourth status report includes the information about the third data. The information about the third data may be the delay information and/or the data amount of the third data.

In other words, in this case, the trigger condition of the fourth status report may be:

When stored duration of to-be-transmitted data (namely, the third data) is greater than (or may be greater than or equal to) the second threshold, a previously sent status report (namely, the third status report) does not include information about the to-be-transmitted data.

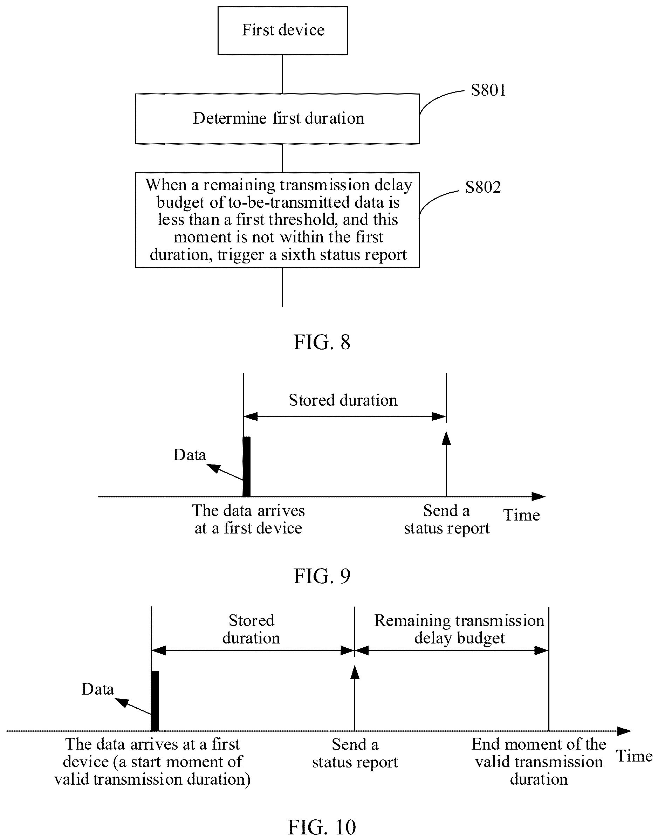

In addition, an embodiment of this application further provides another status report triggering method, to avoid repeatedly reporting information about data. In FIG. 8, an example in which the first device is used as an execution body is used to illustrate the method. However, the execution body of the example is not limited in this application. For example, the first device in FIG. 8 may alternatively be a module, for example, a chip, a chip system, or a processor, used in the first device, or may be a logical node, a logical module, or software that can implement all or some node functions of the first device. The method includes the following steps.

S801: The first device determines first duration.

In S801, the first device determines a start moment of the first duration and a value of the first duration. In other words, the first device may determine a range of the first duration in time domain.

Optionally, the start moment of the first duration may be a trigger moment of a fifth status report or a sending moment of the fifth status report.

The fifth status report may include delay information of to-be-transmitted data of the first device, for example, stored duration or a remaining transmission delay budget of the to-be-transmitted data. For example, the fifth status report may be a DSR.

The value of the first duration may be preconfigured, for example, configured before the first device is delivered, may be configured by using semi-static signaling (for example, an RRC message), may be indicated by a dynamic message (for example, a MAC CE or DCI), may be predefined in a protocol, or may be configured in another manner. This is not limited in this embodiment of this application.

S802: The first device does not trigger a sixth status report within the first duration.

The sixth status report may include the delay information and/or a data amount of the to-be-transmitted data of the first device. For example, the sixth status report may be a BSR or a DSR.

Optionally, the first duration may take effect on all logical channels or logical channel groups of the first device, or on a MAC entity of the first device. In other words, within the first duration, the sixth status report is no longer triggered by all the logical channels or logical channel groups of the first device. For example, after triggering/sending the fifth status report, the first device starts the first duration. When a remaining transmission delay budget of data on a fourth logical channel of the first device is less than the first threshold within the first duration, the sixth status report is not triggered, where the fourth logical channel is any logical channel of the first device. Alternatively, it may be understood as that when a remaining transmission delay budget of data on a fourth logical channel of the first device is less than the first threshold, if this moment is not within the first duration, the sixth status report may be triggered.

Alternatively, the first duration may take effect on a logical channel, a logical channel group, or a data radio bearer DRB (data radio bearer, DRB) of the first device. For example, when the fifth status report is triggered by the fourth logical channel, the first duration is started for the fourth logical channel. Within the first duration, the sixth status report is no longer triggered by the fourth logical channel. Alternatively, a condition for triggering the sixth status report by the fourth logical channel may be understood as follows: If a remaining transmission delay budget of to-be-transmitted data (for example, data belonging to the fourth logical channel) is less than the first threshold and this moment is not within the first duration, the sixth status report may be triggered.

Alternatively, when the first device sends the fifth status report, if the fifth status report is triggered by the fourth logical channel, the first duration is started for the fourth logical channel. When a remaining transmission delay budget of to-be-transmitted data on the fourth logical channel is less than the first threshold, if this moment is not within the first duration, the sixth status report may be triggered. It may alternatively be understood as that when a remaining transmission delay budget of to-be-transmitted data on the fourth logical channel is less than the first threshold, if this moment is within the first duration, the sixth status report is not triggered.

Alternatively, when the first duration takes effect on a logical channel group, the first duration started for the fourth logical channel takes effect on any logical channel in the logical channel group to which the fourth logical channel belongs. For example, within the first duration, the sixth status report is no longer triggered by a logical channel in the logical channel group to which the fourth logical channel belongs. Alternatively, a condition for triggering the sixth status report by the fourth logical channel may be understood as follows: If a remaining transmission delay budget of to-be-transmitted data (for example, data belonging to a logical channel in the logical channel group to which the fourth logical channel belongs) is less than the first threshold, and this moment is not within the first duration, the sixth status report may be triggered.

In a possible implementation, a timer may be configured, so that the first device no longer triggers the sixth status report within the first duration after triggering/sending the fifth status report. For example, a specific timer may be configured for the first device. The first device starts or restarts the timer when triggering/sending the fifth status report (or a start/restart moment of the timer is a moment at which the fifth status report is triggered/sent), and the first device no longer triggers the sixth status report within running time of the timer. In other words, running duration of the timer is the value of the first duration.

The duration of the timer may be preconfigured, for example, configured before the first device is delivered, may be configured by using semi-static signaling (for example, an RRC message), may be indicated by a dynamic message (for example, a MAC CE or DCI), may be predefined in a protocol, or may be configured in another manner. This is not limited in this embodiment of this application.

For example, the timer may be referred to as a DSR prohibit timer (DSR prohibit timer), or the timer may have another name. This is not limited in this embodiment of this application.

The following embodiments are described by using an example in which the timer is referred to as a prohibit timer. Optionally, the prohibit timer may take effect on all logical channels or logical channel groups of the first device, or on a MAC entity of the first device. In other words, within running time of the prohibit timer, the sixth status report is no longer triggered by all the logical channels or logical channel groups of the first device. For example, after triggering/sending the fifth status report, the first device starts/restarts the prohibit timer. Within the running time of the prohibit timer, when a remaining transmission delay budget of data on the fourth logical channel of the first device is less than the first threshold, the sixth status report is not triggered. It may alternatively be understood as that when a remaining transmission delay budget of data on the fourth logical channel of the first device is less than the first threshold, if this moment is not within the running time of the prohibit timer, or the prohibit timer is not running (not running), the sixth status report may be triggered.

Alternatively, the prohibit timer may take effect on a logical channel, a logical channel group, or a DRB of the first device. For example, when the fifth status report is triggered by the fourth logical channel, the prohibit timer is started or restarted for the fourth logical channel. Within the running time of the prohibit timer, the sixth status report is no longer triggered by the fourth logical channel. Alternatively, a condition for triggering the sixth status report by the fourth logical channel may be understood as follows: If a remaining transmission delay budget of to-be-transmitted data (for example, data belonging to the fourth logical channel) is less than the first threshold and this moment is not within the running time of the prohibit timer, the sixth status report may be triggered.

Alternatively, when the first device sends the fifth status report, if the fifth status report is triggered by the fourth logical channel, the first device starts/restarts the prohibit timer for the fourth logical channel. When a remaining transmission delay budget of to-be-transmitted data on the fourth logical channel is less than the first threshold, if this moment is not within the running time of the prohibit timer, the sixth status report may be triggered. It may alternatively be understood as that when a remaining transmission delay budget of to-be-transmitted data on the fourth logical channel is less than the first threshold, if this moment is within the running time of the prohibit timer, the sixth status report is not triggered.

Alternatively, when the first device sends the fifth status report, if the fifth status report is triggered by the fourth logical channel, the prohibit timer is started/restarted for the fourth logical channel (or a logical channel group in which the fourth logical channel is located). When a remaining transmission delay budget of to-be-transmitted data on any logical channel in the logical channel group to which the fourth logical channel belongs is less than the first threshold, if this moment is not within the running time of the prohibit timer, the sixth status report may be triggered. It may alternatively be understood as that when a remaining transmission delay budget of to-be-transmitted data on any logical channel in the logical channel group to which the fourth logical channel belongs is less than the first threshold, if this moment is within the running time of the prohibit timer, the sixth status report is not triggered.

Optionally, in S802, one of the trigger conditions of the sixth status report, that is, the remaining transmission delay budget of the to-be-transmitted data is less than the first threshold, may alternatively be replaced with: The remaining transmission delay budget of the to-be-transmitted data is less than or equal to the first threshold.

In addition, the sixth status report may alternatively be triggered based on other delay information of the to-be-transmitted data. For example, the sixth status report is triggered based on stored duration of the to-be-transmitted data. One of the trigger conditions of the sixth status report, that is, the remaining transmission delay budget of the to-be-transmitted data is less than the first threshold, may alternatively be replaced with: The stored duration of the to-be-transmitted data is greater than (or may be greater than or equal to) a second threshold. For example, a condition that needs to be met for triggering the sixth status report may be: When stored duration of data on the fourth logical channel of the first device is greater than the second threshold, if this moment is not within the first duration, the sixth status report may be triggered. For another possible replacement condition, refer to the foregoing descriptions of S802. Details are not described herein again.

The following describes a to-be-transmitted delay budget and stored duration of data in the foregoing embodiments of this application.

A remaining transmission delay budget of the data is time that may be further used to transmit data over an air interface, and may be determined based on valid transmission duration of the data.

Optionally, the valid transmission duration may be understood as a transmission delay requirement of the data, for example, a transmission delay budget or a packet loss delay budget. For example, the transmission delay budget may be a packet delay budget (packet delay budget, PDB) or a PDU set delay budget (PDU set delay budget, PSDB) corresponding to the data. The PDB may be understood as a requirement of a delay from the first device to a network device or a user plane function (user plane function, UPF), that is, duration from time when a PDU arrives at the first device to time when the PDU is successfully received by the network device or the UPF, and is usually configured by a core network (core network, CN) by using a 5G QoS identifier (5G QoS identifier, 5QI). The PSDB may be understood as a transmission delay requirement of a PDU set, for example, duration from time when a PDU in the PDU set first arrives at the first device to time when all PDUs in the PDU set are successfully received by the network device or the UPF. Optionally, the PSDB may be configured by the core network.

Alternatively, the valid transmission duration may be understood as the packet loss delay budget of the data, and the packet loss delay budget may be understood as that the data is to be discarded after duration corresponding to the delay budget, that is, the data is not sent by the first device for initial transmission. Generally, the packet loss delay budget may be implemented by a PDCP layer. For example, the PDCP layer configures a packet discard timer for each service data unit (service data unit, SDU). When an SDU from a higher layer arrives at the PDCP layer, the timer is started. When the timer expires, a corresponding SDU or PDU is discarded.

When the valid transmission duration of the data is understood as the packet loss delay budget of the data, the first device may determine (or obtain) valid transmission duration of data in the following manner.

The first device obtains third configuration information, where the third configuration information is used to configure a packet discard timer, and a start moment of the packet discard timer is a moment at which the first device obtains data (for example, data such as the first data, the second data, or the third data in the foregoing embodiments) (or a moment at which the data arrives at the first device). When the first packet discard timer expires, the first device discards the data. Running duration of the packet discard timer is the valid transmission duration of the data.

When the valid transmission duration is understood as the transmission delay budget of the data, the first device may determine valid transmission duration of data in the following manner.

The first device obtains third configuration information, where the third configuration information is used to configure a PDB or a PSDB of data (for example, data such as the first data, the second data, or the third data in the foregoing embodiments), a moment at which the data arrives at the first device is a start moment of the PDB or the PSDB, and valid transmission duration of the data is duration of the PDB or the PSDB configured in the third configuration information.

Optionally, if data includes a plurality of data units, a moment at which the data arrives at the first device may be understood as a moment at which one data unit in the data arrives at the first device. For example, when data is a PDU set or a data burst, a moment at which the data arrives at the first device may be understood as a moment at which a PDU in the PDU set or the data burst arrives at the first device, for example, may be a corresponding moment at which a PDU in the PDU set or the data burst first arrives at the first device. It may be understood that the PDU that first arrives at the first device is not necessarily a 1^{st} PDU in a generation or sending sequence in the PDU set or the data burst to which the PDU belongs.

Optionally, a moment at which a data unit (or data including one data unit) arrives at the first device may be understood as a moment at which the data unit arrives at an access stratum (access stratum, AS) of the first device, or may be a moment at which the data unit arrives at a service data adaptation protocol (service data adaptation protocol, SDAP) layer, a PDCP layer, a radio link control (radio link control, RLC) layer, an LCH, or a MAC layer. This is not limited in this embodiment of this application.

In addition, optionally, if data includes a plurality of data units, a moment at which the data is received by a second device (or referred to as a moment at which the data arrives at the second device) may be understood as a moment at which all the data units included in the data arrive at the second device. For example, when data is a PDU set or a data burst, a moment at which the data arrives at the second device may be understood as a moment at which all PDUs in the PDU set or the data burst arrive at the second device, that is, a corresponding moment at which a PDU in the PDU set or the data burst last arrives at the second device. A PDU that last arrives at the first device is not necessarily a last PDU in a generation or sending sequence in the PDU set or the data burst, or is not necessarily the PDU that last arrives at the first device in the PDU set or the data burst to which the PDU belongs.

Optionally, a moment at which a data unit (or data including one data unit) arrives at the second device may be understood as a moment at which the data arrives at an AS layer, an SDAP layer, a PDCP layer, an RLC layer, an LCH, or a MAC layer of the second device. This is not limited in this embodiment of this application.

The remaining transmission delay budget of the data may be determined (or referred to as obtained) based on a trigger moment of a status report including the remaining transmission delay budget of the data (for example, the status report may be a DSR including the remaining transmission delay budget of the data) or a sending moment of the status report including the remaining transmission delay budget of the data, and valid transmission duration. Specifically, a start moment of the remaining transmission delay budget of the data may be the trigger moment of the status report including the remaining transmission delay budget of the data or the sending moment of the status report including the remaining transmission delay budget of the data, and a termination moment (or referred to as an end moment) of the remaining transmission delay budget of the data may be a termination moment of the valid transmission duration.

The stored duration of the data is duration for which the data has been stored in the first device. A start moment of the stored duration of the data is an arrival moment of the data (that is, a moment at which the data arrives at the first device). A termination moment of the stored duration of the data may be a moment at which a status report including the stored duration of the data (for example, a DSR including the stored duration of the data) is triggered or a moment at which the status report including the stored duration of the data is sent.

For example, in a case of determining the remaining transmission delay budget/the stored duration based on the moment at which the status report is sent, as shown in FIG. 9 and FIG. 10, a start moment of duration of the remaining transmission delay budget of the data is a moment at which a status report (the status report is the status report including the remaining transmission delay budget of the data) is sent, and a termination moment of the duration of the remaining transmission delay budget of the data is a moment at which the valid transmission duration of the data expires. A start moment of the stored duration of the data is an arrival moment of the data, and a termination moment of the stored duration of the data is a moment at which a status report (the status report is the status report including the stored duration of the data) is sent. In other words, the valid transmission duration may be a sum of the stored duration of the data and the remaining transmission delay.

For another example, in a case of determining the remaining transmission delay budget/the stored duration based on the moment at which the status report is triggered, a start moment of the remaining transmission delay budget is a moment at which a status report (the status report is the status report including the remaining transmission delay budget of the data) is triggered, and a termination moment of the remaining transmission delay budget is a moment at which the valid transmission duration of the data expires. A start moment of the stored duration of the data is an arrival moment of the data, and a termination moment of the stored duration of the data is a moment at which a status report (the status report is the status report including the stored duration of the data) is triggered.

The sending moment of the status report may be an initial transmission moment of the status report.

It may be understood that, in the foregoing embodiments, methods and/or steps implemented by each device may alternatively be implemented by a component (for example, a processor, a chip, a chip system, a circuit, a logic module, or software, for example, a chip or a circuit) that may be used in the device.

The foregoing mainly describes the solutions provided in this application from the perspective of interaction between devices. Correspondingly, this application further provides a communication apparatus, and the communication apparatus is configured to implement the foregoing methods. The communication apparatus may be the first device or the second device in the foregoing method embodiments, an apparatus including the foregoing device, or a component that may be used in the foregoing device.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, functional modules may be obtained through division based on corresponding functions, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

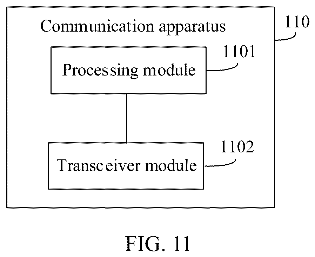

FIG. 11 is a diagram of a structure of a communication apparatus 110. For example, as shown in FIG. 11, the communication apparatus 110 includes: a transceiver module 1102 and a processing module 1101. For ease of description, FIG. 11 shows only main components of the communication apparatus.

In some embodiments, the communication apparatus 110 may further include a storage module (which is not shown in FIG. 11), configured to store program instructions and data.

In some embodiments, the transceiver module 1102 may also be referred to as a transceiver unit, configured to implement a sending function and/or a receiving function. The transceiver module 1102 may include a transceiver circuit, a transceiver machine, a transceiver, or a communication interface.

In some embodiments, the transceiver module 1102 may include a receiving module and a sending module, which are respectively configured to perform receiving and sending type steps performed by the first device or the second device in the foregoing method embodiments, and/or configured to support another process of the technology described in this specification. The processing module 1101 may be configured to perform processing type steps (for example, determining and generation) performed by the first device or the second device in the foregoing method embodiments, and/or configured to support another process of the technology described in this specification.

When the communication apparatus 110 is configured to implement the function of the first device,
in a possible design, the processing module 1101 is configured to trigger a first status report, where the first status report includes a data amount and delay information of first data, and the first data is to-be-transmitted data of the first device. The processing module 1101 is further configured to trigger a second status report, where the second status report includes a data amount of second data, and the second data is to-be-transmitted data of the first device. The transceiver module 1102 is configured to send a target status report by using a first transmission resource, where the target status report includes the data amount of the first data.

Optionally, the processing module 1101 is further configured to obtain first configuration information, where the first configuration information is used to configure a first logical channel to report delay information.

Optionally, the processing module 1101 is further configured to cancel the triggered second status report.

In another possible design, the processing module 1101 is configured to obtain third data. When a remaining transmission delay budget of the third data is less than a first threshold, if information about the third data has not been reported, the processing module 1101 is further configured to trigger a fourth status report, where the fourth status report includes the information about the third data.

Optionally, the transceiver module 1102 is configured to send a third status report. If the third status report does not include the information about the third data, the processing module 1101 is configured to trigger the fourth status report.

Optionally, the processing module 1101 is further configured to obtain second configuration information, where the second configuration information is used to configure a third logical channel to report delay information, and the third data belongs to the third logical channel.

Optionally, the processing module 1101 is further configured to obtain third configuration information, where the third configuration information is used to configure a packet discard timer, a start moment of the packet discard timer is a moment at which the third data is obtained, and when the first packet discard timer expires, the processing module 1101 discards the third data; and the remaining transmission delay budget of the third data is determined based on the packet discard timer.

When the communication apparatus 110 is configured to implement the function of the second device,
the transceiver module 1102 is configured to send first configuration information, where the first configuration information is used to configure a first logical channel to report delay information. The transceiver module 1102 is further configured to receive a target status report by using a first transmission resource, where the target status report includes a data amount of first data. The first data belongs to a second logical channel, the second logical channel is different from the first logical channel, and the target status report is a buffer status report. Alternatively, the first data belongs to the first logical channel, and the target status report further includes delay information of the first data.

Optionally, the transceiver module 1102 is further configured to send third configuration information, where the third configuration information is used to configure a packet discard timer, a start moment of the packet discard timer is an arrival moment of the first data, and when the first packet discard timer expires, the first data is discarded; and a remaining transmission delay budget of the first data is determined based on the packet discard timer.

All related content of the steps in the foregoing method embodiments may be cited in function descriptions of the corresponding functional modules. Details are not described herein again.

In this application, the communication apparatus 110 is presented in a form of functional modules obtained through division in an integrated manner. The "module" herein may be a specific ASIC, a circuit, a processor and a memory that execute one or more software or firmware programs, an integrated logic circuit, and/or another component that can provide the foregoing functions.

In some embodiments, when the communication apparatus 110 in FIG. 11 is a chip or a chip system, a function/an implementation process of the transceiver module 1102 may be implemented through an input/output interface (or a communication interface) of the chip or the chip system, and a function/an implementation process of the processing module 1101 may be implemented by a processor (or a processing circuit) of the chip or the chip system.

Because the communication apparatus 110 provided in this embodiment may perform the foregoing methods, for a technical effect that can be achieved by the communication apparatus 110, refer to the foregoing method embodiments. Details are not described herein again.

In another possible product form, the communication apparatus 110 may alternatively be implemented by using the following: one or more field programmable gate arrays (field programmable gate arrays, FPGAs), a programmable logic device (programmable logic device, PLD), a controller, a state machine, gate logic, a discrete hardware component, any other suitable circuit, or any combination of circuits that can perform various functions described in this application.

In some embodiments, in terms of hardware implementation, a person skilled in the art may figure out that the communication apparatus 110 may be in a form of the communication apparatus 500 shown in FIG. 5.

In an example, the function/the implementation process of the processing module 1101 in FIG. 11 may be implemented by the processor 501 in the communication apparatus 500 shown in FIG. 5 by invoking the computer-executable instructions stored in the memory 503. The function/the implementation process of the transceiver module 1102 in FIG. 11 may be implemented through the communication interface 504 in the communication apparatus 500 shown in FIG. 5.

It should be noted that the structure shown in FIG. 11 does not constitute a specific limitation on the structure of the device. For example, in some other embodiments of this application, the device may include more or fewer components than those shown in the figure, some components may be combined, some components may be split, or the components may be differently arranged. The components shown in the figure may be implemented by hardware, software, or a combination of software and hardware.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the communication apparatus may not include the memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is the chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or instructions are executed by a computer, functions in any one of the foregoing method embodiments are implemented.

This application further provides a computer program product. When the computer program product is executed by a computer, functions of any one of the foregoing method embodiments are implemented.

A person of ordinary skill in the art may understand that, for the purpose of convenient and brief description, for a detailed working process of the foregoing system, apparatus, and unit, refer to corresponding processes in the foregoing method embodiments. Details are not described herein again.

It may be understood that the system, apparatus, and method described in this application may alternatively be implemented in another manner. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may be physically separated or not, this is, may be located together in the same place or distributed on a plurality of network units. Parts displayed as units may be or may be not physical units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state disk, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example description of this application defined by the accompanying claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A data amount reporting method, wherein the method comprises:
triggering, by a first device, a first status report, wherein the first status report comprises a data amount and delay information of first data, and the first data is to-be-transmitted data of the first device;
triggering, by the first device, a second status report, wherein the second status report comprises a data amount of second data, and the second data is to-be-transmitted data of the first device; and
sending, by the first device, a target status report by using a first transmission resource, wherein the target status report comprises the data amount of the first data.

2. The method according to claim 1, wherein the target status report is a higher-priority one of the first status report and the second status report; and
the second data comprises the first data.

3. The method according to claim 2, wherein a logical channel multiplexing priority of the first status report is the same as a logical channel multiplexing priority of the second status report, and the second status report is a buffer status report.

4. The method according to claim 1, wherein the method further comprises:
obtaining, by the first device, first configuration information, wherein the first configuration information is used to configure a first logical channel to report delay information, and the first logical channel belongs to the first device.

5. The method according to claim 4, wherein the first data belongs to a second logical channel, the second logical channel is different from the first logical channel, the second status report is triggered by the first data, and the second status report is a buffer status report.

6. The method according to claim 4, wherein the first data belongs to the first logical channel, and
the first status report is triggered by the first data; and/or
the second status report is triggered by data in a second logical channel, the second logical channel is different from the first logical channel, and the second status report is a buffer status report.

7. The method according to claim 4 or 6, wherein the first data belongs to the first logical channel and the second data does not comprise the first data.

8. The method according to claim 7, wherein the target status report comprises the first status report and the second status report.

9. The method according to claim 1, wherein the method further comprises:
canceling, by the first device, the triggered second status report.

10. The method according to claim 9, wherein the first status report and the second status report are triggered by the first data.

11. A data amount reporting method, wherein the method comprises:
obtaining, by a first device, third data; and
when a remaining transmission delay budget of the third data is less than a first threshold, if information about the third data has not been reported, triggering, by the first device, a fourth status report, wherein the fourth status report comprises the information about the third data.

12. The method according to claim 11, wherein the information about the third data comprises a data amount of the third data and/or the remaining transmission delay budget of the third data.

13. The method according to claim 11 or 12, wherein before the remaining transmission delay budget of the third data is less than the first threshold, the method further comprises:
sending, by the first device, a third status report; and
if the information about the third data has not been reported, triggering, by the first device, the fourth status report comprises:
if the third status report does not comprise the information about the third data, triggering, by the first device, the fourth status report.

14. The method according to any one of claims 11 to 13, wherein the method further comprises:
obtaining, by the first device, second configuration information, wherein the second configuration information is used to configure a third logical channel to report delay information, and the third data belongs to the third logical channel.

15. The method according to any one of claims 11 to 14, wherein the method further comprises:
obtaining, by the first device, third configuration information, wherein the third configuration information is used to configure a packet discard timer, a start moment of the packet discard timer is a moment at which the first device obtains the third data, and when the first packet discard timer expires, the first device discards the third data; and the remaining transmission delay budget of the third data is determined based on the packet discard timer.

16. A data amount reporting method, wherein the method comprises:
sending, by a second device, first configuration information, wherein the first configuration information is used to configure a first logical channel to report delay information; and
receiving, by the second device, a target status report by using a first transmission resource, wherein the target status report comprises a data amount of the first data, wherein
the first data belongs to a second logical channel, the second logical channel is different from the first logical channel, and the target status report is a buffer status report; or
the first data belongs to the first logical channel, and the target status report further comprises delay information of the first data.

17. The method according to claim 16, wherein the first data belongs to the first logical channel, the target status report comprises a first status report and a second status report, the first status report comprises the data amount and the delay information of the first data, the second status report comprises a data amount of second data, and the second data does not comprise the first data.

18. The method according to claim 16 or 17, wherein the delay information of the first data is a remaining transmission delay budget of the first data.

19. The method according to claim 18, wherein the method further comprises:
sending, by the second device, third configuration information, wherein the third configuration information is used to configure a packet discard timer, a start moment of the packet discard timer is an arrival moment of the first data, and when the first packet discard timer expires, the first data is discarded; and the remaining transmission delay budget of the first data is determined based on the packet discard timer.

20. A communication apparatus, wherein the apparatus comprises a module configured to perform the method according to any one of claims 1 to 15.

21. A communication apparatus, wherein the apparatus comprises a module configured to perform the method according to any one of claims 16 to 19.

22. A communication apparatus, wherein the communication apparatus comprises a processor and a memory, the memory is configured to store computer instructions, and when the processor executes the instructions, the communication apparatus is enabled to perform the method according to any one of claims 1 to 19.

23. A computer-readable storage medium, wherein the computer-readable storage medium comprises a computer program or instructions, and when the computer program or the instructions are run on a computer, the method according to any one of claims 1 to 19 is performed.

24. A computer program product, wherein the computer program product comprises instructions; and when the instructions are run on a computer, the method according to any one of claims 1 to 19 is performed.

25. A chip, wherein the chip comprises a processor, and the processor is configured to run instructions, to enable an apparatus comprising the chip to perform the method according to any one of claims 1 to 19.
